# EUROPÄISCHE PATENTANMELDUNG

(11) **EP 4 397 455 A2**
(43) Veröffentlichungstag der Anmeldung: **10.07.2024**
(21) Anmeldenummer: 24176651.8
(22) Anmeldetag: 07.04.2020
(51) Int. Cl.: B25J 11/00

(54) **PRODUKTIONSANLAGE UND VERFAHREN ZUR HERSTELLUNG EINES BETONTÜBBINGS EINES TUNNELAUSBAUSYSTEMS**

(30) Priorität: 07.04.2019 DE 102019109084
(62) Teilanmeldung aus: 20721159.0
(71) Anmelder: HERRENKNECHT AKTIENGESELLSCHAFT, 77963 Schwanau (DE)
(72) Erfinder: Medel, Stefan, 77723 Gengenbach (DE)
(74) Vertreter: Klickow & Wetzel PartGmbB

(57) **Zusammenfassung**

Produktionsanlage zur Herstellung eines Betontübbings (500) eines Tunnelausbausystems mit wenigstens einer Schalung (10) zur Herstellung des Betontübbings (500), wobei die Produktionsanlage entweder als Umlaufanlage, die wenigstens eine Produktionslinie (200) mit wenigstens zwei Arbeitsstationen (210, 220, 230, 240, 250, 260) und mit wenigstens einem Transportweg (110) zwischen den wenigstens zwei Arbeitsstationen (210, 220, 230, 240, 250, 260) zum Ausführen jeweils wenigstens eines Arbeitsschrittes zur Herstellung des Betontübbings (500) aufweist, oder als Standanlage mit wenigstens zwei stationär angeordneten Schalungen 10, wobei an den Schalungen (10) die notwendigen Arbeitsschritte zur Herstellung des Betontübbings (500) jeweils ausgeführt werden, vorgesehen ist, und mit wenigstens einer Härtestation (300), zum Härten eines in die Schalung (10) zum Herstellen des Betontübbings (500) eingefüllten Betons wobei wenigstens ein Roboter (140) zum Ausführen des wenigstens einen Arbeitsschritt an einer der wenigstens zwei Arbeitsstationen (210, 220, 230, 240, 250, 260) oder zwei Schalungen (10) vorgesehen ist, dass wenigstens ein Fahrweg (120) vorgesehen ist, der sich wenigstens teilweise entlang oder quer zu der wenigstens einen Produktionslinie (200) oder entlang oder quer zu der Schalung (10) erstreckt, dass wenigstens ein Fahrelement (130) vorgesehen ist, an dem der wenigstens eine Roboter (140) mit einer Basis (131) angeordnet ist, und mit dem der wenigstens eine Roboter (140) entlang oder quer zu der wenigstens einen Produktionslinie (200) oder Schalung (10) wenigstens teilweise verfahrbar ist.

## Beschreibung

Die Erfindung betrifft eine Produktionsanlage zur Herstellung eines Betontübbings eines Tunnelausbausystems mit wenigstens einer Schalung zur Herstellung des Betontübbings, wobei die Produktionsanlage entweder als Umlaufanlage, die wenigstens eine Produktionslinie mit wenigstens zwei Arbeitsstationen und mit wenigstens einem Transportweg zwischen den wenigstens zwei Arbeitsstationen zum Ausführen jeweils wenigstens eines Arbeitsschrittes zur Herstellung des Betontübbings aufweist, oder als Standanlage mit wenigstens zwei stationär angeordneten Schalungen, wobei an den Schalungen die notwendigen Arbeitsschritte zur Herstellung des Betontübbings jeweils ausgeführt werden, vorgesehen ist, und mit wenigstens einer Härtestation, zum Härten eines in die Schalung zum Herstellen des Betontübbings eingefüllten Betons. Weiterhin betrifft die Erfindung ein Verfahren und eine Steuerung dazu.

Zur Betontübbingproduktion werden die einzelnen Arbeitsschritte zur Herstellung eines Betontübbings manuell durchgeführt. Neben den dabei anfallenden Arbeitskosten ist die auszuführende Arbeit monoton und für die Mitarbeiter anstrengend. Weiterhin werden die Tätigkeiten mit schweren Gegenständen durchgeführt, sodass Verletzungsgefahr gegeben ist. Trotz der wiederkehrenden Tätigkeiten ist es gleichzeitig notwendig, die Arbeiten mit sehr hoher Präzision durchzuführen.

Aufgabe der Erfindung ist daher, zumindest Teilaspekte der zuvor genannten Probleme zu reduzieren.

Gelöst wird die Aufgabe dadurch, dass wenigstens ein Roboter zum Ausführen des wenigstens einen Arbeitsschritt an einer der wenigstens zwei Arbeitsstationen oder wenigstens zwei Schalungen vorgesehen ist, dass wenigstens ein Fahrweg vorgesehen ist, der sich wenigstens teilweise entlang oder quer zu der wenigstens einen Produktionslinie oder entlang oder quer zu der Schalung erstreckt, dass wenigstens ein Fahrelement vorgesehen ist, an dem der wenigstens eine Roboter mit einer Basis angeordnet ist, und mit dem der wenigstens eine Roboter entlang oder quer zu der wenigstens einen Produktionslinie oder Schalung wenigstens teilweise verfahrbar ist.

Hierdurch wird es auf einfache Weise möglich, eine Automatisierung der Produktionsanlage durchzuführen. Dabei kann gleichzeitig die notwendige Präzision beibehalten werden.

Eine weitere Lehre der Erfindung sieht vor, dass die Basis des wenigstens einen Roboters an dem wenigstens einen Fahrelement entlang des Fahrelements in die Arbeitsstation hinein bewegbar ist.

Eine weitere Lehre der Erfindung sieht vor, dass der Fahrweg oberhalb der Arbeitsstation, bevorzugt auf Pfeilern, oder der Schalungen angeordnet ist. Durch das Anordnen des Fahrwegs oberhalb der Arbeitsstationen oder der Schalungen wird es möglich, mit dem Roboter von oben in den Bereich der Arbeitsstationen einzugreifen und hier mit Bezug auf die eingesetzte Schalung auf einfache Weise die notwendigen Arbeitsstellen zu erreichen.

Eine weitere Lehre der Erfindung sieht vor, dass der Fahrweg jeweils wenigstens eine Fahrspur beidseitig entlang oder quer zu der wenigstens einen Produktionslinie oder Schalung aufweist. Dabei ist vorteilhaft, dass es sich bei dem Fahrelement um wenigstens eine Traverse handelt, die mit ihren Enden jeweils auf einer Fahrspur verfahrbar ist, und/oder an der die Basis des wenigstens einen Roboters über die Arbeitsstation verfahrbar angeordnet ist. Durch das Aufteilen des Fahrwegs in Fahrspuren ist es möglich, entweder ein verfahrbares Portal einzusetzen, oder, wenn der Fahrweg oberhalb der Arbeitsstationen angeordnet ist, hier ein präzises Verfahren zu ermöglichen. Wird hierbei eine Traverse verwendet, kann der Roboter wiederum auf einfache Weise im Raum der Arbeitsstationen angeordnet werden. Wird dabei an der Traverse eine Basis vorgesehen, die ebenfalls verfahrbar ist, erhöht sich der Freiheitsgrad der Anordnung des im Raum der Arbeitsstationen auf einfache Weise.

Eine weitere Lehre der Erfindung sieht vor, dass der Roboter ein Werkzeug aufweist und so ausgeführt ist, dass das Werkzeug im Raum der Arbeitsstation bewegbar und verschwenkbar ist. Dabei ist vorteilhaft, dass das Werkzeug wechselbar in Bezug auf den Roboter ausgeführt ist.

Weiterhin ist vorteilhaft, dass das wechselbare Werkzeug in einem mit dem Roboter verfahrbaren oder an der Arbeitsstation befindlichen Aufbewahrungsraum enthalten ist. Wird der Roboter mit Armen und Gelenken sowie Drehgelenken und Antrieben versehen, ist es des Weiteren möglich, den Freiheitsgrad der Anordnung eines Werkzeugs, das sich beispielsweise am Roboter angeordnet befindet, im Raum der Arbeitsstation auf einfache Weise zu erhöhen. Ist das Werkzeug dabei noch wechselbar ausgeführt, können mehrere Arbeitsschritte an einer Arbeitsstation von demselben Roboter ausgeführt werden. Je nach Art der auszuführenden Tätigkeiten und insbesondere auch nach Größe der Werkzeuge ist es dabei vorteilhaft die Werkzeuge entweder direkt fahrbar im Bereich des Roboters oder an der jeweiligen Arbeitsstation anzuordnen. Auch hierdurch ist es auf einfache Weise möglich, unterschiedliche Arbeitsschritte mit denselben Werkzeugen durchzuführen. Beispielsweise kann ein Drehmomentschrauber verwendet werden, um Befestigungen zu lösen oder herzustellen und gleichzeitig auch andere Arbeitsschritte, die einen Drehantrieb erfordern, durchzuführen.

Vorteilhafterweise handelt es sich bei dem Werkzeug um einen Drehmomentschrauber, eine Bürste, eine Walze, ein Vermessungselement, eine Düse, einen Scanner, einen Greifer, oder eine Kamera.

Eine weitere Lehre der Erfindung sieht vor, dass die wenigstens eine Arbeitsstation eine Station zum Öffnen oder Schließen der Schalung oder eines Deckels der Schalung, eine Station zum Entnehmen des Betontübbings, eine Station zum Reinigen der Schalung, eine Station zum Vorbereiten der Schalung zum nachfolgenden Einbringen von Beton, eine Station zum Bestücken der Schalung mit wenigstens einem Element des Betontübbings, eine Station zum Vermessen der Schalung, eine Station zum Befüllen der Schalung mit Beton und/oder eine Station zum Behandeln der Oberfläche des eingebrachten Betons des Betontübbings ist. Dabei ist vorteilhaft, dass es sich bei dem wenigstens einen Element um eine Dichtung, einen Schutzliner, ein Bewehrungselement, einen Sensor, insbesondere einen Temperatursensor, ein Entwässerungselement, ein Kunststoffelement und/oder ein Erektordübel handelt.

Eine weitere Lehre der Erfindung sieht vor, dass wenigstens zwei parallel angeordnete Produktionslinien mit wenigstens zwei parallelen Arbeitsstationen vorgesehen sind.

Eine weitere Lehre der Erfindung sieht vor, dass der Roboter zwischen wenigstens zwei parallelen Arbeitsstationen der wenigstens zwei parallelen Produktionslinien verfahrbar ist.

Eine weitere Lehre der Erfindung sieht vor, dass wenigstens eine Produktionsanlage zur Fertigung von Bewehrungen für die Tübbinge vorgeschaltet ist, die bevorzugt in einem Lager zwischengelagert werden.

Eine weitere Lehre der Erfindung sieht vor, dass wenigstens eine modular aufgebaut ist.

Eine weitere Lehre der Erfindung sieht vor, dass die Härtestation aus einzelnen Härtekammern aufgebaut ist, die bevorzugt als ein Standart-Iso-Container ausgeführt sind.

Eine weitere Lehre der Erfindung sieht vor, dass die Härtestation mehrere übereinander angeordnete Ebenen aufweist.

Gelöst wird die Aufgabe weiterhin durch ein Verfahren zur Herstellung eines Betontübbings eines Tunnelausbausystems mit wenigstens einer Schalung insbesondere mit einer Produktionsanlage nach einem der Ansprüchen 1 bis 10, mit den Schritten:
1. Anordnen einer Schalung in einer jeweiligen Arbeitsstation entlang einer Produktionslinie der Produktionsanlage, bevorzugt positionsgenau,
2. falls erforderlich, Erkennen des Schalungstyps in der Arbeitsstation,
3. falls erforderlich, Aufnehmen des zur Durchführung eines Arbeitsschrittes notwendigen Werkzeugs durch einen Roboter,
4. Verfahren einer Basis des Roboters entlang eines Fahrwegs und/oder einer Traverse zum X, Y-Ausrichten an eine notwendige Position zur Durchführung des Arbeitsschrittes an der Arbeitsstation,
5. Ausführen und Abschließen des Arbeitsschritts durch den Roboter mit dem dafür notwendigen Werkzeug,
6. falls erforderlich Überprüfen des Abschlusses des Arbeitsschrittes, bevorzugt durch den Roboter, mit einem dafür ausgelegten Werkzeug,
7. falls erforderlich, Wiederholen der Schritte 3 bis 6 zur Durchführung eines weiteren Arbeitsschrittes an der Arbeitsstation,
8. Transport der Schalung zur nächsten Arbeitsstation,
9. falls erforderlich Wiederholen der Schritte 3 bis 8 zur Durchführung eines Arbeitsschrittes an der nächsten Arbeitsstation.

Durch den Einsatz des erfindungsgemäßen Verfahrens wird es auf einfache Weise möglich, die Qualität der Tübbingproduktion zu erhöhen. Gleichzeitig kann auf einfache Weise präzise der Materialeinsatz bei der Tübbingproduktion erfasst und ausgewertet werden. Zusätzlich ist es möglich, die Herstellungsprozesse jedes einzelnen Tübbings auf einfache Weise zu dokumentieren. Hierdurch wird es möglich, dass es im Zusammenhang mit jedem einzelnen hergestellten Tübbing auch noch später im montierten Tunnel ein Nachvollziehen dessen Herstellung und damit auch gleichzeitig das Nachweisen des Herstellungsprozesses möglich ist.

Eine weitere Lehre der Erfindung sieht vor, dass es sich bei dem Werkzeug um einen Drehmomentschrauber, eine Bürste, eine Walze, ein Vermessungselement, eine Düse, einen Scanner, einen Greifer, oder eine Kamera, handelt.

Eine weitere Lehre der Erfindung sieht vor, dass die wenigstens eine Arbeitsstation eine Station zum Öffnen oder Schließen der Schalung oder eines Deckels der Schalung, eine Station zum Entnehmen des Betontübbings, eine Station zum Reinigen der Schalung, eine Station zum Vorbereiten der Schalung zum nachfolgenden Einbringen von Beton, eine Station zum Bestücken der Schalung mit Elementen des Betontübbings, eine Station zum Vermessen der Schalung, eine Station zum Befüllen der Schalung mit Beton und/oder eine Station zum Behandeln der Oberfläche des eingebrachten Betons des Betontübbings ist.

Eine weitere Lehre der Erfindung sieht vor, dass das wechselbare Werkzeug aus einem mit dem Roboter verfahrbaren oder an der Arbeitsstation befindlichen Aufbewahrungsraum entnommen oder abgelegt wird.

Eine weitere Lehre der Erfindung sieht vor, dass ein Arbeitsschritt ein Öffnen oder Schließen der Schalung oder des Deckels der Schalung, Entnehmen des Betontübbings, ein Reinigen der Schalung, ein Vorbereiten der Schalung zum nachfolgenden Einbringen von Beton, ein Bestücken der Schalung mit wenigsten einem Element des Betontübbings, ein Vermessen der Schalung, ein Befüllen der Schalung mit Beton oder ein Behandeln der Oberfläche des eingebrachten Betons des Betontübbings ist. Dabei ist vorteilhaft, dass es sich bei dem wenigstens einen Element um eine Dichtung, einen Schutzliner, ein Bewehrungselement, einen Sensor, insbesondere einen Temperatursensor, ein Entwässerungselement, ein Kunststoffelement und/oder ein Erektordübel handelt.

Eine weitere Lehre der Erfindung sieht vor, dass es sich bei dem Werkzeug um einen Drehmomentschrauber, eine Bürste, eine Walze, ein Vermessungselement, eine Düse, einen Scanner, einen Greifer, oder eine Kamera, handelt.

Gelöst wird die Aufgabe weiterhin durch eine Steuerung des zuvor beschriebenen Verfahrens insbesondere in Verbindung mit einer zuvor beschriebenen Produktionsanlage, bei dem Arbeitsschritte an Arbeitsstationen abgearbeitet werden, indem Daten und/oder Sensordaten ausgewertet werden, basierend auf den Daten und/oder Sensordaten ein Roboter an eine X,Y-Position entlang einer Produktionslinie positioniert wird, basierend auf den Daten und/oder Sensordaten ein Werkzeug zur Ausführung des Arbeitsschritts ausgewählt wird und der Arbeitsschritt durch Übergabe von Steuerungsdaten an den Roboter und/oder das Werkzeug ausgeführt werden. Hierdurch wird es auf einfache Weise möglich, die Qualität der Tübbingproduktion zu erhöhen. Gleichzeitig kann auf einfache Weise präzise der Materialeinsatz bei der Tübbingproduktion erfasst und ausgewertet werden. Zusätzlich ist es möglich, die Herstellungsprozesse jedes einzelnen Tübbings auf einfache Weise zu dokumentieren.

Gelöst wird die Aufgabe weiterhin durch eine Schalung zur Herstellung eines Betontübbings eines Tunnelausbausystems, bevorzugt zum Einsatz in einer zuvor beschriebenen Produktionsanlage oder bei der Durchführung eines zuvor beschriebenen Verfahrens, mit einer Betonwanne zur Aufnahme einer zur Herstellung des Tübbings notwendigen Betonmenge und falls erforderlich zur Aufnahme der vorgesehenen Bewehrung des Betontübbings, wobei die Betonwanne wenigstens einen Boden und an dem Boden der Form nach angepassten Wände aufweist, wobei wenigstens ein Wand von dem Boden lösbar und gegenüber dem Boden zwischen einer geschlossenen Position und einer geöffneten Position verschwenkbar angeordnet ist, wobei die Schalung wenigstens ein Antriebssystem zum Verschwenken der wenigstens einen Wand zwischen der offenen und der geschlossenen Position und zum Halten in der jeweiligen Position aufweist, und dass das Antriebssystem wenigstens einen Aktuator für das Verschwenken der wenigstens einen Wand zwischen der offenen und der geschlossenen Position aufweist.

Hierdurch wird es auf einfache Weise möglich, das Öffnen und Schließen zu vereinfachen und gleichzeitig auf einfache Weise das Halten sicherzustellen, so dass die Schalung sicher geschlossen bleibt.

Eine weitere Lehre der Erfindung sieht vor, dass sich wenigstens zwei Wände an einem ihrer beiden äußeren Endbereiche mit ihren kurzen Seiten in geschlossener Position berühren und dabei eine Ecke der Betonwanne ausformen. Dabei ist vorteilhaft, dass an einer der zwei Wände im äußeren Endbereich ein männliches Eingriffelement und an der anderen Wand im äußeren Endbereich ein weibliches Eingriffelement vorgesehen ist, die in geschlossener Position der zwei Wände ineinandergreifen. Hierdurch kann auf einfache Weise der Schluss der Ecke sichergestellt werden.

Dabei ist weiterhin vorteilhaft, dass die zwei Wände in ihren äußeren Endbereichen miteinander mittels wenigstens einer Schraubverbindung oder einer Klemmverbindung miteinander verbunden werden, wobei die Schraubverbindung oder Klemmverbindung bevorzugt zur Positionssicherung dient, und/oder wobei die Schraubverbindung eine Schraube mit einem entlang wenigstens eines Teils der Schraube angeordneten Federelement aufweist. Dieses stellt insbesondere eine einfache Zusatzsicherung dar, bei der auf einfache Weise die Positionierung gewährleistet bleibt.

Eine weitere Lehre der Erfindung sieht vor, dass die Klemmverbindung ein Arretierungselement aufweist, das an einem der Wandelemente angeordnet ist und verschwenkbar zwischen einer offenen und einer geschlossenen Position mit wenigstens einem Aktuator, beispielsweise einem Hydraulikzylinder oder einem Spindelsystem, bewegbar ist. Dabei ist vorteilhaft, dass der Aktuator mit dem nachfolgend beschriebenen Antriebssystem verbunden ist. Hierdurch kann auf einfache Weise eine Sicherung bereitgestellt werden.

Eine weitere Lehre der Erfindung sieht vor, dass die wenigstens eine Wand zum Bewegen zwischen der offenen und der geschlossenen Position mit wenigstens zwei Aktuatoren des Antriebssystems verbunden ist. Hierdurch lässt sich auf einfache Weise die notwendigen Haltekräfte aufbringen und verteilen.

Eine weitere Lehre der Erfindung sieht vor, dass das wenigstens eine Wandelement zwei äußere Endbereiche aufweist, und dass pro Endbereich zum Bewegen und Halten des Wandelements wenigstens ein Aktuator vorgesehen ist. Es hat sich gezeigt, dass hierdurch auf besonders einfache Weise ein dichter Verschluss auch bei Befüllung der Schalung mit Beton und evtl. Verformung der Seitenwände hierdurch gewährleistet werden kann.

Eine weitere Lehre der Erfindung sieht vor, dass das Antriebssystem an einer Arbeitsstation mit einem externen Antrieb zum Antreiben des Antriebssystems verbindbar ist. Hierdurch kann der Aufbau der Schalung möglichst einfach ausfallen, da auf einen Antrieb in der Schalung verzichtet werden kann.

Eine weitere Lehre der Erfindung sieht vor, dass es sich bei dem Antriebssystem um ein Hydrauliksystem mit wenigstens einem Hydraulikkreislauf handelt, wobei das Antriebssystem wenigstens einen Hydraulikzylinder als Aktuator aufweist, der mit dem Hydraulikkreislauf verbunden ist. Hierdurch kann auf einfache Weise sowohl das Bewegen als auch das Halten mit hinreichenden Kräften bereitgestellt werden.

Dabei ist vorteilhaft, dass der Hydraulikkreislauf ein Sperrelement zum Halten des Drucks im Hydraulikkreislauf aufweist, wobei es sich bevorzugt um ein Lastaufnahmeventil handelt. Dabei ist weiterhin vorteilhaft, dass der Hydraulikkreislauf ein Element zum Ausgleich einer Druckänderung und/oder einer Volumenänderung im Hydraulikkreislauf aufweist, wobei es sich bevorzugt um einen Blindzylinder oder um einen Membranspeicher handelt. Dabei ist weiterhin vorteilhaft, dass der Hydraulikkreislauf wenigstens ein Anschlusselement zum lösbaren Anschließen des Hydraulikkreislaufs an ein Hydraulikaggregat als externen Antrieb des Antriebssystems an einer Arbeitsstation aufweist. Weiterhin ist vorteilhaft vorgesehen, dass die einzelnen Hydraulikzylinder mittels Druckfolgeventile verbunden sind, Dadurch kann auf einfache Weise eine Ablaufsteuerung der einzelnen Schritte des Öffnens und/oder Schließens der Schalung erreicht werden. Durch wenigstens eines der zuvor genannten Elemente lässt sich ein erfindungsgemäßer Hydraulikkreislauf auf einfache Weise bereitstellen.

Eine weitere Lehre der Erfindung sieht vor, dass es sich bei dem Antriebssystem um einen mechanischen Antrieb als Aktuator, bevorzugt um einen Spindelantrieb, handelt. Dabei ist vorteilhaft, dass der mechanische Antrieb selbsthemmend ausgelegt ist oder mit einem Sperrelement versehen ist. Dabei ist weiterhin vorteilhaft, dass der mechanische Antrieb ein Verbindungselement zum lösbaren Verbinden mit einem externen Rotationsantrieb, beispielsweise einem Drehmomentenschrauber, als externen Antrieb des Antriebssystems an einer Arbeitsstation aufweist.

Eine weitere Lehre der Erfindung sieht vor, dass an der Schalung schwenkbar wenigstens ein Deckelelement vorgesehen ist, der auf der Oberseite der Betonwanne anordbar ist und auf dieser die Oberseite wenigstens teilweise überdeckt. Dabei ist vorteilhaft, dass das Deckelelement zwischen einer offenen und einer geschlossenen Position mit wenigstens einem Aktuator, beispielsweise einem Hydraulikzylinder oder einem Spindelsystem, verschwenkbar ist, der das Deckelement bevorzugt in der jeweiligen Position hält. Dabei ist weiterhin vorteilhaft, dass der Aktuator mit dem zuvor beschriebenen Antriebssystem verbunden ist.

Eine weitere Lehre der Erfindung sieht vor, dass das Deckelelement ein Arretierungselement aufweist, das das Deckelelement in geschlossener Position gegenüber der Schalung arretiert. Nachfolgend wird die Erfindung anhand von Ausführungsbeispielen in Verbindung mit einer Zeichnung näher erläutert. Dabei zeigen:
- Figur 1: eine Draufsicht auf eine ersten Ausführungsform einer erfindungsgemäßen Produktionsanlage,
- Figur 2: eine räumliche Ansicht zu Figur 1,
- Figur 3: eine Seitenansicht zu Figur 1,
- Figur 4: eine weitere räumliche Ansicht zu Figur 1,
- Figur 5: eine räumliche Ausschnittsvergrößerung zu Figur 3,
- Figur 6: eine räumliche Ausschnittsansicht zu Figur 5,
- Figur 7: eine räumliche Ansicht einer ersten Ausführungsform einer erfindungsgemäßen Schalung,
- Figur 8: eine vergrößerte Ausschnittsansicht zu Figur 7,
- Figur 9: eine räumliche Ansicht einer geöffneten erfindungsgemäßen Schalung,
- Figur 10: eine Schnittansicht durch ein Befestigungselement zu Figur 7.
- Figur 11: eine räumliche Ansicht einer zweiten Ausführungsform einer erfindungsgemäßen Schalung in geschlossenem Zustand,
- Figur 11a: eine vergrößerte Ausschnittsansicht zu Figur 11,
- Figur 12: eine Unteransicht zu Figur 11,
- Figur 12a: eine vergrößerte Ausschnittsansicht zu Figur 12,
- Figur 12b: eine weitere vergrößerte Ausschnittsansicht zu Figur 12,
- Figur 13: eine räumliche Ansicht einer zweiten Ausführungsform einer erfindungsgemäßen Schalung in geöffnetem Zustand,
- Figur 13a: eine vergrößerte Ausschnittsansicht zu Figur 13,
- Figur 13b: eine weitere vergrößerte Ausschnittsansicht zu Figur 13,
- Figur 14: eine räumliche Seitenansicht auf die Seitenwand der erfindungsgemäßen Schalung zu den Figuren 11 und 13,
- Figur 15: eine räumliche Seitenansicht auf die Stirnwand der erfindungsgemäßen Schalung,
- Figur 16: eine Draufsicht auf eine zweite Ausführungsform einer erfindungsgemäßen Produktionsanlage,
- Figur 17: eine räumliche Ansicht zu Figur 16,
- Figur 18: eine Draufsicht zu Figur 16,
- Figur 19: eine Seitenansicht zu Figur 16,
- Figur 20: eine teilgeschnittene vergrößerte Seitenansicht zu Figur 19,
- Figur 21: eine weitere Seitenansicht zu Figur 20,
- Figur 22: eine Draufsicht zu Figur 20,
- Figur 23: eine räumliche Ansicht einer erfindungsgemäßen Bearbeitungsstation zu Figur 11,
- Figur 24: eine Draufsicht auf eine dritte Ausführungsform einer erfindungsgemäßen Produktionsanlage,
- Figur 25: eine räumliche Ansicht zu Figur 24, und
- Figur 26: eine vergrößerte Ausschnittsansicht zu Figur 25.

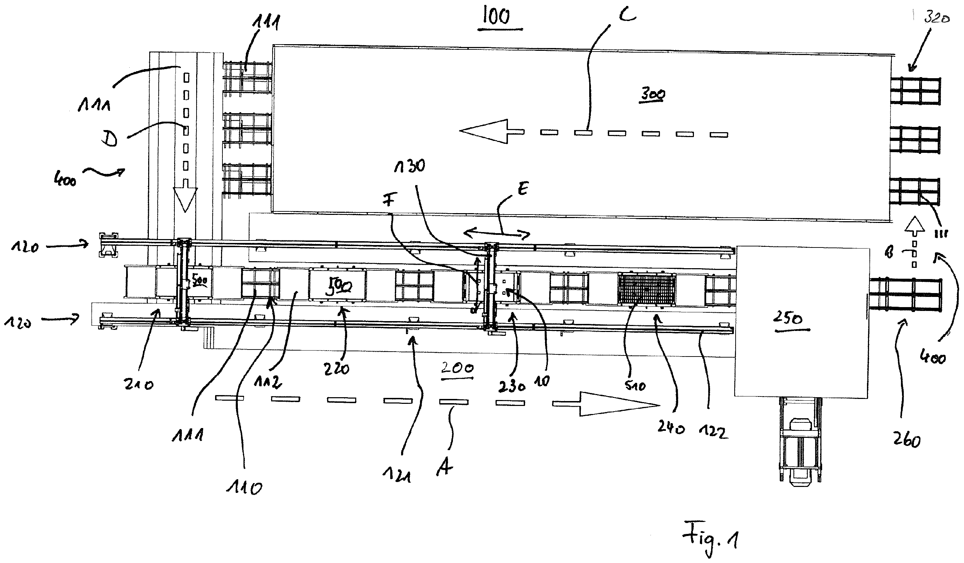

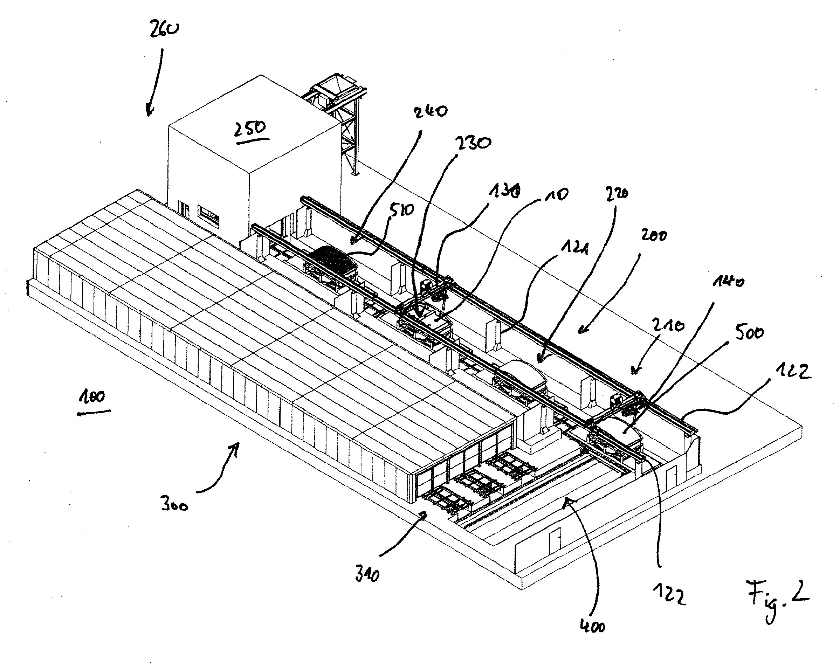

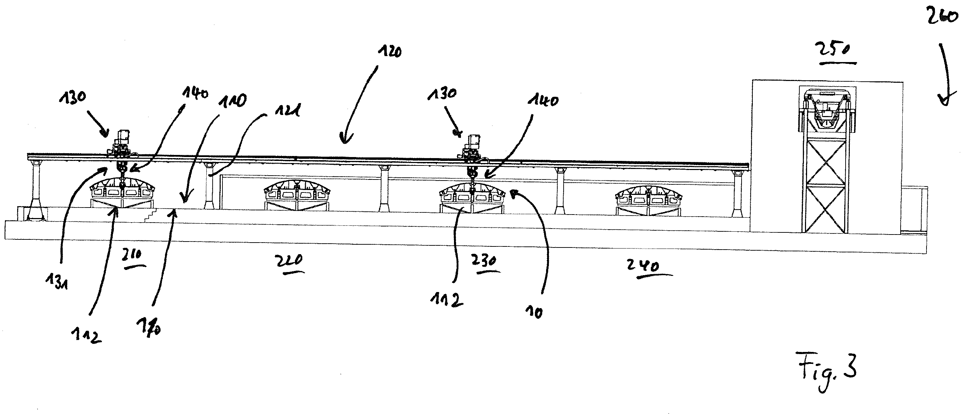

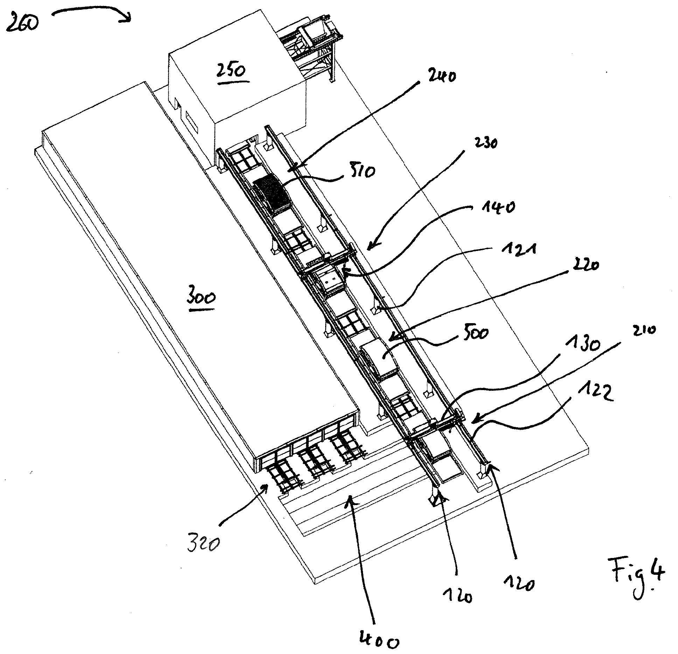

Figur 1 bis 4 zeigen eine erste Ausführungsform einer erfindungsgemäßen Produktionsanlage 100. Die Produktionsanlage 100 ist dabei beispielsweise als Umlaufanlage ausgeführt. Die Umlaufanlage besteht dabei aus einer Produktionslinie 200 und einem Härtetunnel 300. Der Härtetunnel 300 weist dabei mindestens eine Härtelinie 320, in Figur 1 dargestellt drei Härtelinien 320, auf. Die Produktionslinie 200 und der Härtetunnel 300 bzw. dessen Härtelinien 320 sind mit einem Querförderer 400 verbunden.

Die Produktionsanlage 100 weist einen Transportweg 110 auf. Der Transportweg 110 weist eine Fahrbahn 111 auf, auf der ein Transportmittel 112 verfahrbar ist. Auf dem Transportmittel 112 ist eine erfindungsgemäße Schalung 10 angeordnet. Die Transportmittel 112 bewegen sich entlang des Transportwegs 110 in Pfeilrichtung A durch die Produktionslinie 200.

Nach Durchlaufen der Produktionslinie 200 werden sie vom Querförderer 400 in Pfeilrichtung B den Härtelinien 320 des Härtetunnels 300 zugeführt. Auch der Querförderer 400 weist eine Fahrbahn 111 auf, auf der die Transportmittel 112 bewegt werden. Gleiches gilt auch für die Härtelinien 320 des Härtetunnels 300.

Nach Durchlaufen des Härtetunnels 300 in Pfeilrichtung C werden die Transportmittel 112 mittels des Querförderer 400 in Pfeilrichtung D der Produktionslinie 200 wieder zugeführt. Der Umlauf ist dann abgeschlossen.

In Pfeilrichtung A, in Figur 1 von links nach rechts gesehen, weist die Produktionslinie 200 hier beispielhaft sechs Arbeitsstationen 210 - 260 auf.

An der ersten Arbeitsstation 210 wird die Schalung 10 wie nachfolgend erläutert, geöffnet.

An der zweiten Arbeitsstation 220 wird der fertige Tübbing 500 mittels eines Hebeelements (nicht dargestellt) aus der Schalung 10 entnommen.

An der dritten Arbeitsstation 230 wird die Schalung 10 gereinigt und für die Aufnahme von Einbauelemente sowie die Betonierung vorbereitet. Hierzu wird beispielsweise ein Trennmittel (Schalungsöl) auf alle Flächen und Teile der Schalung aufgebracht, die in den Kontakt mit dem Beton des herzustellenden Tübbings 500 kommen und nicht Bestandteil des Tübbings 500 werden sollen.

An der vierten Arbeitsstation 240 wird die Schalung 10 mit den Einbauteilen bestückt, die Bestandteil des fertigen Tübbings 500 sind. Hierbei handelt es sich beispielsweise um eine Bewehrung 510, Elektrodübel (nicht dargestellt), einen Schutzliner oder dergleichen.

Nach Einbringen der Einbauteile, die alternativ auch vollständig oder teilweise an der dritten Arbeitsstation 230 nach Abschluss der Reinigung und der Vorbereitung in die Schalung 10 eingebracht werden können, wird die Schalung 10 mit den eingebrachten Komponenten kontrolliert, um zu gewährleisten, dass die Schalung 10 korrekt zusammengebaut ist und die Einbauteile des Tübbings 500 korrekt angeordnet sind.

Das Bestücken der Schalung 10 mit den Einbauteilen kann auch aufgeteilt in den Arbeitsstationen 230, 240 erfolgen.

In der fünften Arbeitsstation 250 werden, soweit nicht vorher bereits geschehen, die evtl. vorgesehenen Deckel (nicht dargestellt) der Schalung montiert, der einzubringende Beton vorbereitet nach notwendiger Mixtur und in notwendiger Menge und in die Schalung 10 eingebracht. Anschließend wird der eingebrachte Beton in bekannter Weise verdichtet. Das Einbringen und Verdichten kann abwechselnd erfolgen, bis die notwendige Betonmenge eingebracht wurde.

An der sechsten Arbeitsstation 260 wird die Betonoberfläche 520 des Tübbings behandelt, beispielsweise geglättet. Vor dem Glätten werden evtl. Deckel entfernt.

Die Produktionslinie 200 wird dann nach der sechsten Arbeitsstation 260 in diesem Beispiel verlassen, in dem das Transportmittel 112 mit der Schalung 10 und dem darin vollständig hergestellten rohen Tübbing 500 an den Querförderer 400 übergeben wird.

Die Anzahl der Arbeitsstationen ist hier nur beispielhaft zu sehen. Es ist einem Fachmann ohne weiteres möglich, die Anzahl der Arbeitsstationen durch Zusammenfassen oder Entkoppeln von einzelnen Arbeitsschritten entsprechend den Notwendigkeiten anzupassen.

Weiterhin sieht die Produktionsanlage 100 hier beispielshaft für die ersten vier Arbeitsstationen 210, 220, 230, 240 eine Arbeitsautomatisierung vor. Hierfür ist beidseitig des Transportwegs 110 der Produktionslinie 200 ein Fahrweg 120 angeordnet, der auf Pfeilern 121 erhöht vorgesehen ist. Der Fahrweg 120 weist dabei jeweils eine Fahrspur 122 auf, die beidseitig der Produktionslinie 200 vorgesehen ist. Die beiden Fahrspuren 122 sind mit einer Traverse 130 verbunden, die auf dem Fahrweg 120 in Doppelpfeilrichtung E verfahrbar ist. An der Traverse 130 ist in Doppelpfeilrichtung F bewegbar an dessen Unterseite eine Basis 131 angeordnet. Das Bewegen erfolgt hier beispielhaft mit einem Antrieb 132.

Auf der Basis 131 ist ein Roboter 140 angeordnet. Der Roboter 140 weist Arme 141, Schwenkgelenke 142 und/oder Drehgelenke 143 sowie Antriebe 144 auf. Weiterhin ist am der Basis 131 gegenüberliegenden Ende des Roboters 140 ein Werkzeug 150 angeordnet. Das Werkzeug 150 ist dabei bevorzugt wechselbar ausgeführt, sodass je nach auszuführendem Arbeitsschritt unterschiedliche Werkzeuge 150 verwendet werden können.

Bedingt durch die Verfahrbarkeit der Traverse 130 in Doppelpfeilrichtung E entlang des Fahrwerks 120 sowie der Verfahrbarkeit der Basis 131 in Doppelpfeilrichtung F entlang der Traverse 130 ist es möglich, die Basis 131 des Roboters 140 in X, Y Richtung über der Produktionslinie 200 anzuordnen. Weiterhin ist es durch den Aufbau des Roboters 140 möglich, das Werkzeug 150 an einem beliebigen Punkt (X, Y, Z) im Raum der Produktionslinie 200 anzuordnen, sodass mit dem jeweiligen Werkzeug 150 Arbeiten an oder in der Schalung 10 vom Roboter 140 mit dessen Werkzeug 150 ausführbar sind.

In Abhängigkeit der Arbeitsstationen 210 - 260, deren Anordnung und Ausführung und der gleichzeitig in Ihnen auszuführenden Arbeitsschritte ist es möglich, eine oder auch mehrere, hier dargestellte zwei, Traversen 130 und Roboter 140 in der Produktionslinie 200 vorzusehen.

Die Werkzeuge 150 können dabei in einer Werkzeugbox (nicht dargestellt) entweder direkt an der Traverse 130 oder an der jeweiligen Arbeitsstation 210 - 260 vorgehalten werden, sodass der Roboter 150 der beispielsweise ein wechselbaren Werkzeuganschlusssystem aufweist (nicht dargestellt), sich mit einem Werkzeug verbinden kann, dieses aus der jeweiligen Box entfernen kann, den Arbeitsschritt ausführen kann, dass Werkzeug 150 dann nach Beendigung des Arbeitsschrittes wieder in die Box einbringen kann, und sich von diesen lösen kann.

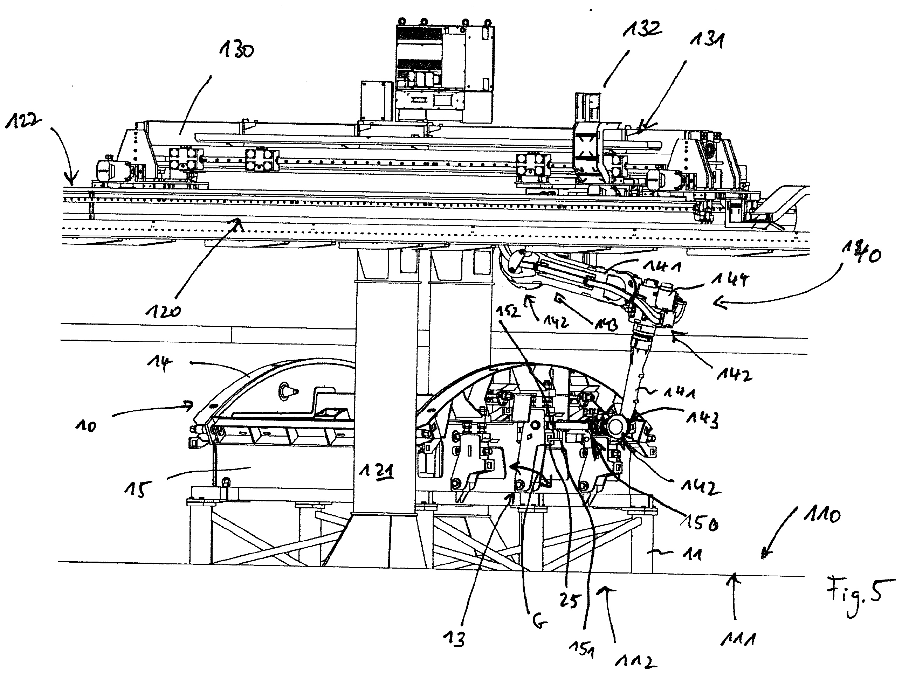

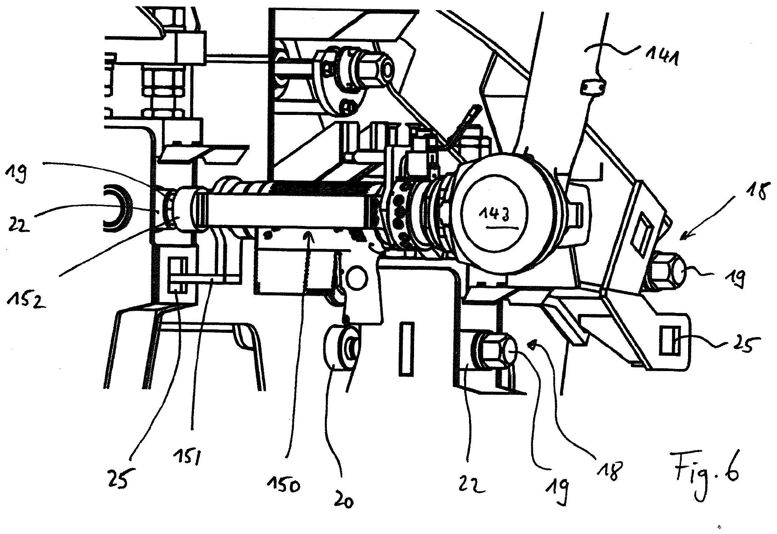

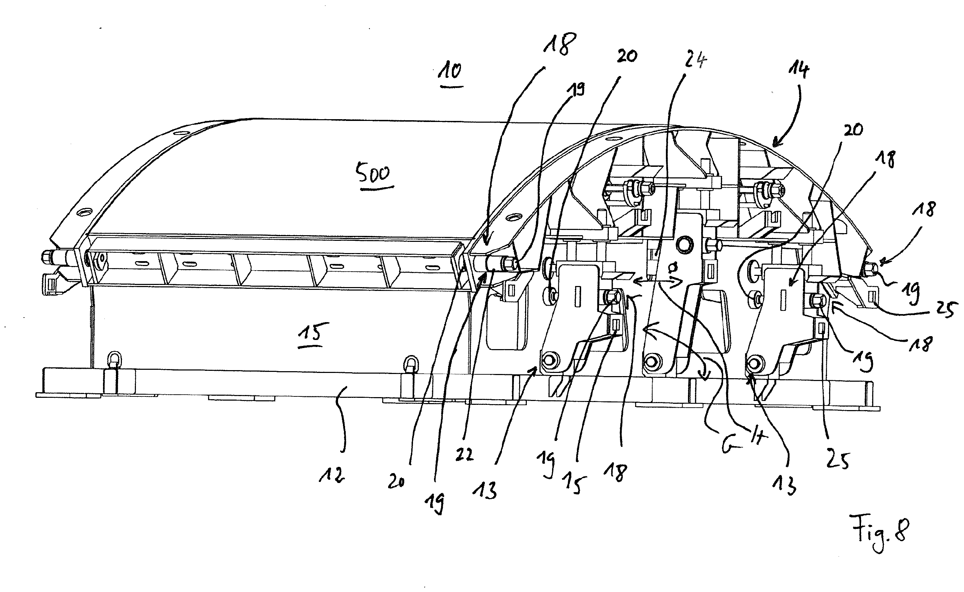

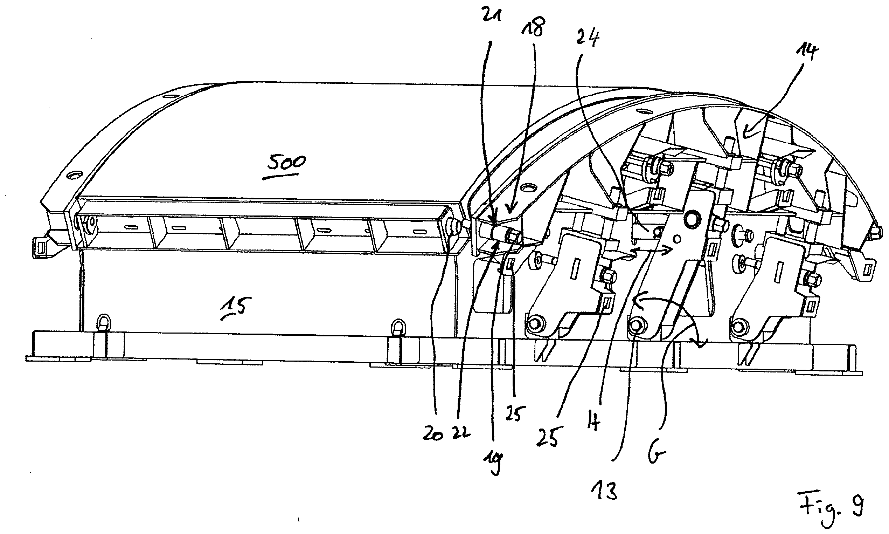

Eine erste Ausführungsform der Schalung 10 (siehe Fig. 5 bis 10) ist beispielsweise über einen Sockel 11 des Transportmittels 112 angeordnet. Die Schalung selbst weist eine Basis 12 auf, mit der sie auf dem Sockel 11 anordbar ist. Über der Basis ist ein Innenraum 17 als eine Betonwanne vorgesehen, der aus einem Boden 16 und Innenwänden der Stirnwände 15 und Seitenwände 14 gebildet ist. In diese Betonwanne bzw. in diesen Innenraum 17 werden die Einbauteile und der Beton eingebracht.

Über Schwenkverbindungen 13 ist die Basis 12 in dieser Ausführungsform nicht beschränkend mit zwei Seitenwänden 14 der Schalung 10 verschwenkbar verbunden. Weiterhin weist die Schalung 10 zwei Stirnwände 15 auf. In den in den Figuren 5 bis 10 gezeigten Schalungen 10 sind die Stirnwände 15 fest mit der Basis 12 verbunden. Es ist hier genauso möglich, dass auch die Stirnwände 15 über Gelenksverbindungen mit der Basis 12 fest schwenkbar verbunden sind.

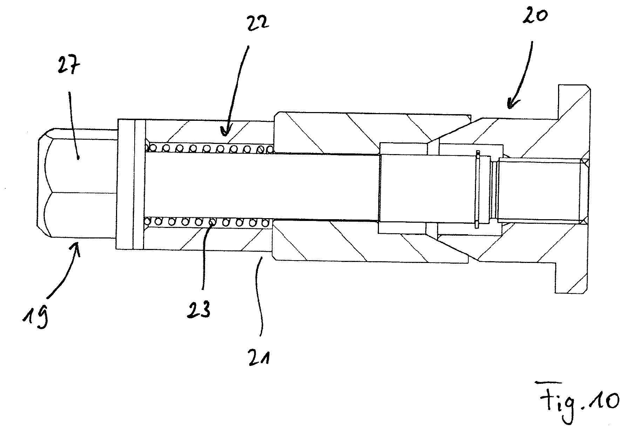

In der in den Figuren 5 bis 10 gezeigten Ausführungsform werden die Seitenwände 14 über Schraubverbindungen mit der Basis 12 und den Stirnwänden 15 haltend verbunden. Eine solche Schraubverbindung ist geschnitten in Figur 10 dargestellt. Sie weist eine Schraube 19 auf, die in ein Gewindeelement 20, die an der Basis 12 oder beispielsweise an der Stirnwand 15 angeordnet ist, eingeschraubt wird. Die Schraube 19 ist eingesteckt in eine beispielsweise an der Seitenwand 14 über einer durchgängigen Öffnung (nicht dargestellt) angebrachten Hülse 21. Die Hülse 21 weist dabei einen Federabschnitt 22 auf, in dem eine Feder 23 vorgesehen ist.

Sind das Gewindeelement 20 und die Hülse 21 fluchtend übereinander angeordnet, wenn beispielsweise die Seitenwand 14 gegen die Stirnwand 15 und die Basis 12 angeordnet ist, kann die Schraube 19 in das Gewindeelement 20 eingeschraubt werden und damit die Seitenwand 14 gegen die Basis 12 und /oder die Stirnwand 15 arretieren.

Dafür ist ein Antriebssystem vorgesehen, dass das Bewegen der Seitenwände 14 gegen die Basis 12 und/oder die Stirnwände 15 alternativ auch den Boden 16 ermöglicht. Beispielsweise kann es sich hierbei um ein Spindelsystem als mechanischen Antrieb handeln, dass, wenn es angetrieben wird, die Seitenwände 14 um die Schwenkverbindung 13 in Doppelpfeilrichtung G entweder von der Basis 12 und den Stirnwänden 15 und dem Boden 16 weg oder zu diesen hinbewegt werden. Alternativ können hierfür auch andere Antriebssysteme wie beispielsweise Hydraulikzylinder eingesetzt werden. Ein weiteres Ausführungsbeispiel mit einem hydraulischen Antriebssystem wird in einem zweiten erfindungsgemäßen Ausführungsbeispiel erläutert, lässt sich aber auch beim ersten Ausführungsbeispiels alternativ einsetzen.

Wird ein mechanisches Antriebssystem verwendet, so kann es so ausgelegt werden, dass es selbsthemmend ist, so dass keine Schraubverbindungen notwendig sind, um die Seitenwände 14 gegen den Boden 16 und die Seitenwände 15 zu halten. Alternativ oder zusätzlich kann auch ein Sperrelement (nicht dargestellt) verwendet werden, um ein Halten zu gewährleisten, indem eine Rückbewegung des Spindelantriebs verhindert wird.

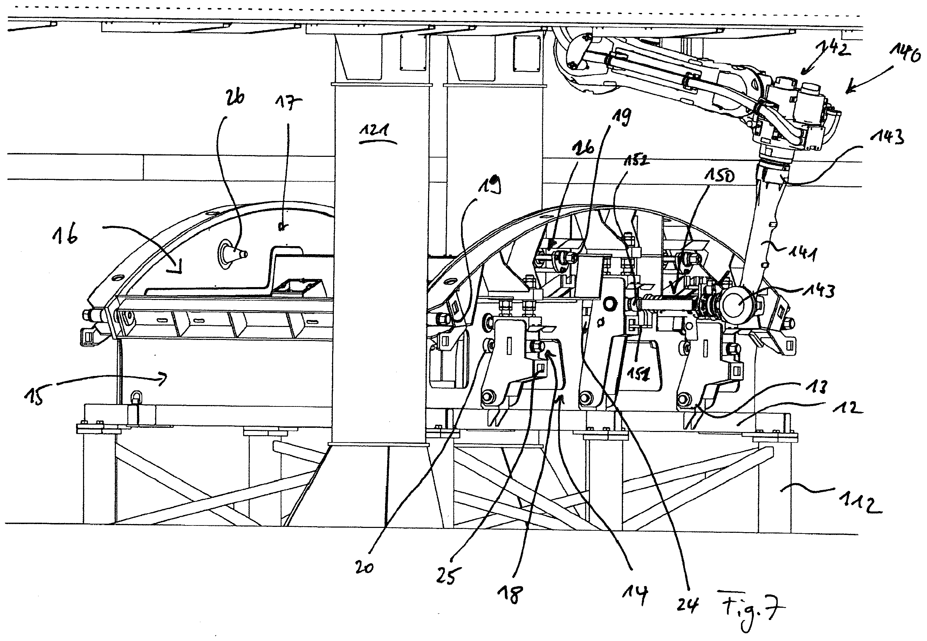

In einer bevorzugten Ausführungsform lässt sich die Zentralspindel auch mit einem geeigneten Werkzeug, vorzugsweise dem gleichen Werkzeug, mit dem die Schrauben 19 gelöst und festgezogen werden, antreiben. In den Figuren 7, 8 und 9 ist ein Stabelement 24 gezeigt, dass von der Zentralspindel in Doppelpfeilrichtung H bewegbar ist.

Das Einschrauben der Schraube 19 in das Gewindeelement 20 erfolgt gegen das Federelement 23, bzw. beim Ausschrauben drückt das Federelement 23 die Schraube 19 nach außen, sodass sich diese leichter beim Ausschrauben aus dem Gewindeelement 20 heraus bewegt.

Hierdurch ist es auf einfache Weise möglich, dass beim Einsatz eines Drehmomentschraubers als Werkzeug 150 am Roboter 140 dieser die Schraube 19 aus dem Gewindeelement 20 herausschrauben kann, sodass sich diese sicher löst, ohne dass der Drehmomentschrauber eine Zugkraft auf die Schraube 19 ausüben muss.

Weiterhin weist die Schalung 10 im Bereich der Schrauben 19 Eingriffsöffnungen 25 auf, in die ein Drehmomentabtragelement 151 eingreift, um das Werkzeug 150 entsteht bzw. den Roboter 140 zu entlasten, die sonst das Drehmoment entsprechend abtragen müssten.

Neben dem Drehmomentschrauber können weitere Werkzeuge sein, nicht abschließen und nur beispielhaft aufgezählt und nicht dargestellt: Bürste, rotierbare Bürste, Düse zur Abgabe von Luft, Wasser oder Chemikalien, Scanner, optische Messeinrichtungen, Walzen.

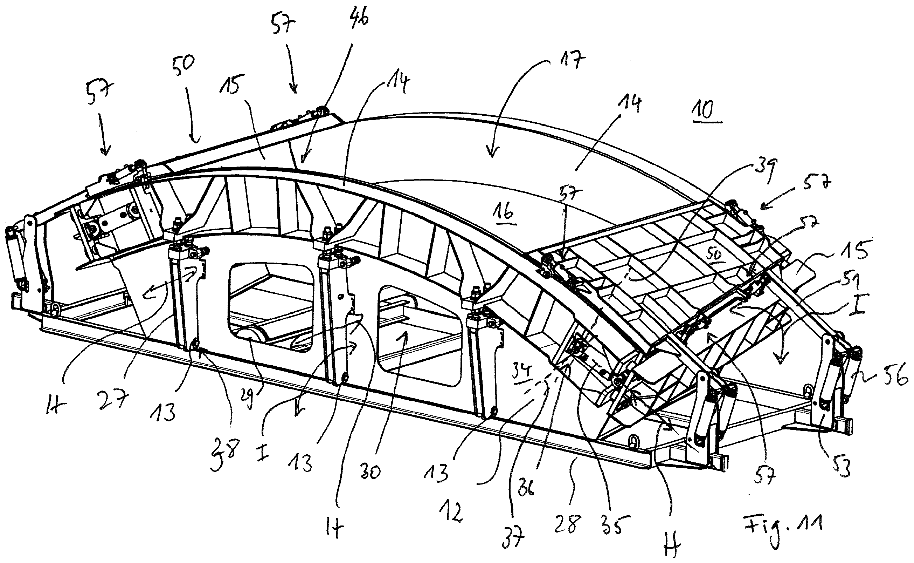

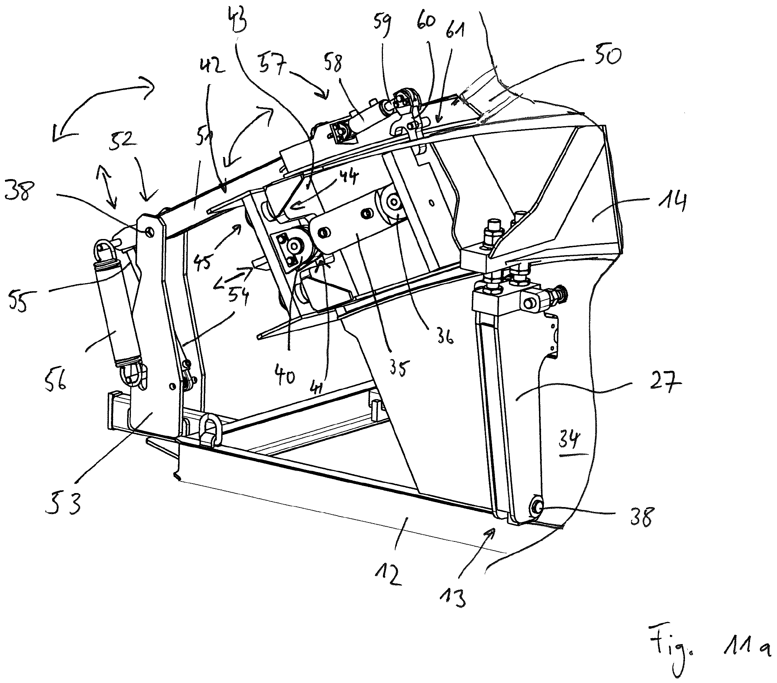

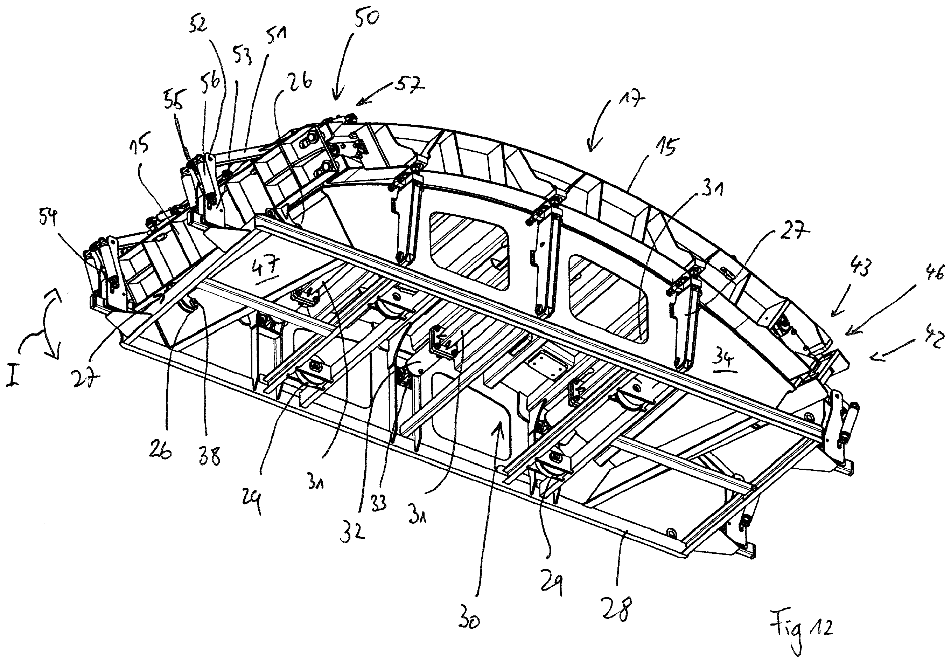

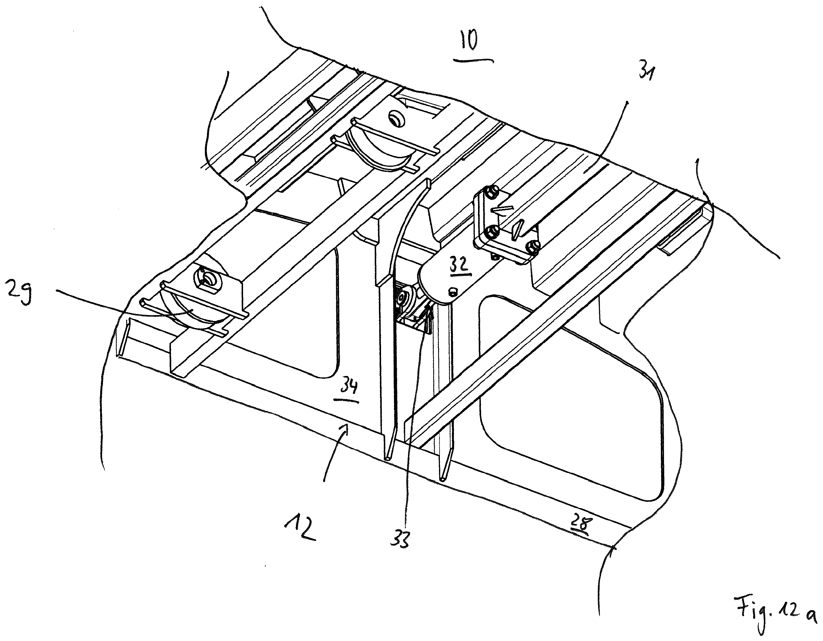

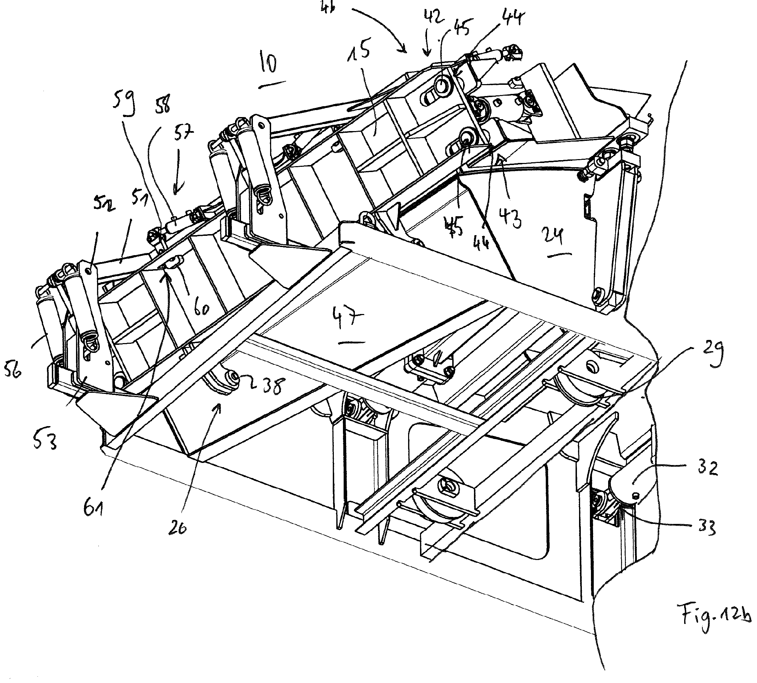

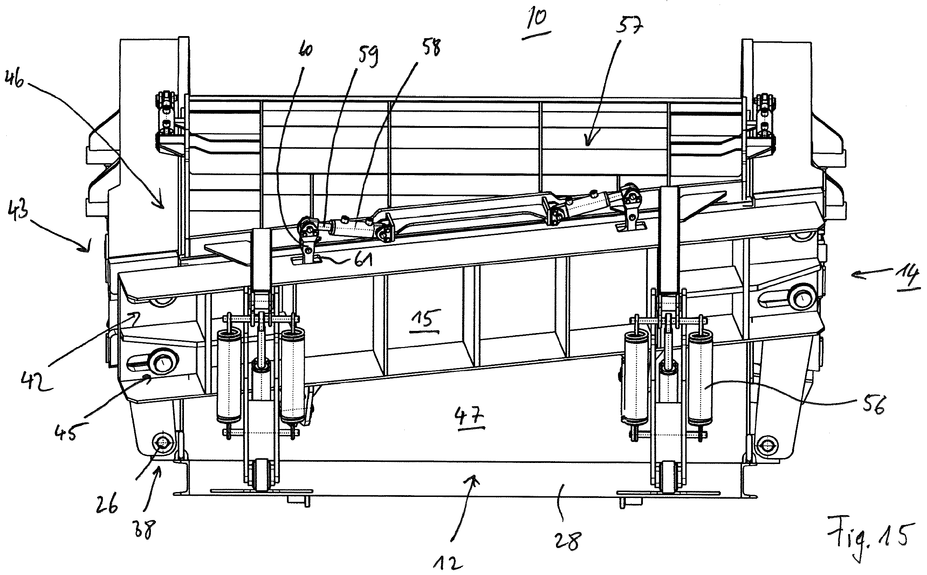

Eine zweite erfindungsgemäße Ausführungsform der Schalung 10 ist in den Fig. 11 bis 15 dargestellt.

Die Schalung 10 weist einen Innenraum 17 zur Aufnahme von Bewehrung, Einbauteilen und Beton zur Herstellung des Betontübbings 500 auf. Dieser wird gebildet durch einen Boden 16 sowie die Innenseiten der Seitenwände 14 und der Stirnwände 15. Der Boden 16 ist dabei auf einer Basis 12 angeordnet.

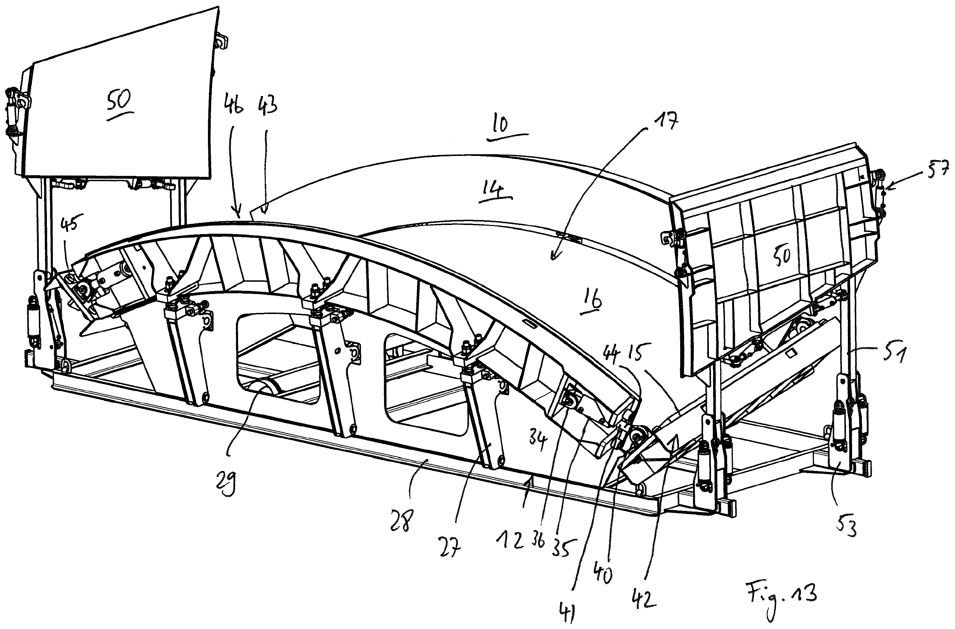

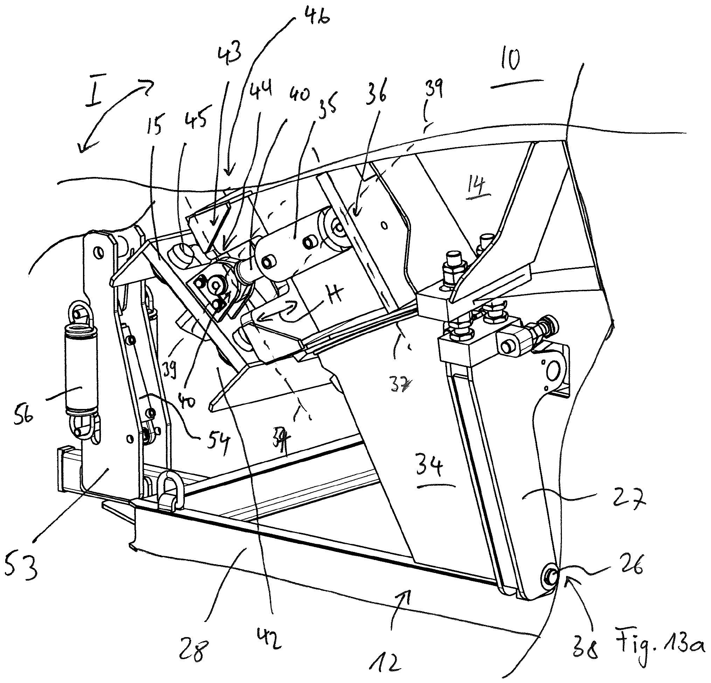

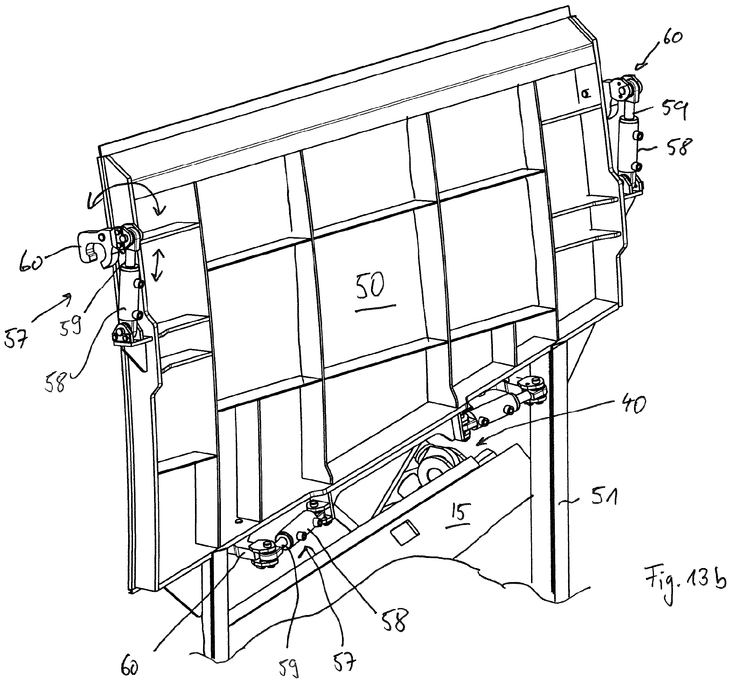

Die Seitenwände 14 und die Stirnwände 15 sind fest an der Basis über eine Schwenkverbindung 13, 26 schwenkbar angeordnet. Die Schwenkverbindung 13, 26 ist jeweils über ein Verbindungselement 27 mit der Seitenwand 14 bzw. mit der Stirnwand 15 verbunden. Über die Verbindungselemente 27 werden die Seitenwände 14, Stirnwände 15 um einen Drehpunkt 28 verschwenkt, sodass sich die Seitenwände 14, Stirnwände 15 vom Boden 16 lösen und nach außen verschwenkt werden, wie dieses in Figur 13 gezeigt ist. Das Verschwenken erfolgt in Doppelpfeilrichtung I.

Die Basis 12 weist einen unteren Rahmen 28 auf, an dem unter anderem beispielsweise ein Fahrwerk angeordnet ist, das hier beispielhaft Räder 29 aufweist. Alternativ kann der Rahmen 28 auch auf einem Transportelement 112 angeordnet sein, um entlang einer Produktionslinie verfahren zu werden, oder der Fahrweg der Produktionslinie selber weist Rollen auf, auf denen die Schalungen 10 verfahrbar sind.

In einem Innenraum 30 der Basis 12 sind Basiselemente 31 und Aktuatoren 32, hier bevorzugt in Form von Hydraulikzylindern, vorgesehen, die mit dem Basiselement 31 fest verbunden sind. Ein Bewegungselement 33 des Aktuators 32, hier beispielsweise eine Kolbenstange, ist mit dem Verbindungselement 27 verbunden. Durch lineares Bewegen des Bewegungselementes 33 des Aktuators 32 wird das Verbindungselement 27 von einer Seitenwand 34 der Basis 12 in Doppelpfeilrichtung H bewegt. Gleichzeitig wird es um den Drehpunkt 38 gedreht, sodass die Seitenwand 14 vom Innenraum 17 bzw. Boden 16 wegbewegt wird, sodass die Schalung 10 in Bezug auf die Seitenwände 14 geöffnet wird.

Zum Öffnen der Stirnwände 15, die ebenfalls über ein Verbindungselement 27 mit einer Schwenkverbindung 26, die einen Drehpunkt 38 aufweist, mit der Basis 12 verbunden ist, ist wenigstens ein Aktuator 35, hier beispielsweise ein Hydraulikzylinder, vorgesehen. Dieser kann ähnlich zu dem zuvor beschriebenen Aktuator 32 in Verbindung mit dem Basiselement 31 im Innenraum 30 angeordnet sein. Alternativ ist der Aktuator 35 über eine Verbindung 36 an der Seitenwand 14 angeordnet. In der Verbindung 36 ist der Aktuator 35 um eine erste Achse 37 drehbar und gleichzeitig um eine zweite Achse 39 drehbar angeordnet, sodass der Aktuator 35, wenn die Stirnwand 15 geöffnet ist, zusammen mit der Seitenwand 14 beim Öffnen derselben verschwenkt werden kann.

Gleiches gilt auch für die Verbindung 40, mit der der Aktuator 35 mit der Stirnwand 15 verbunden ist. Der Aktuator 35 weist ein Bewegungselement 41 auf, hier beispielsweise eine Kolbenstange, die aus dem Aktuator 35 in Doppelpfeilrichtung H heraus bewegt werden kann, um die Stirnwand 15 um den Drehpunkt 38 in der Schwenkverbindung 26 in Doppelpfeilrichtung I zu verschwenken.

Eine Ecke 46 des Innenraums 17 wird durch das Berühren einer Außenseite 42 einer Stirnwand 15 mit einer Außenseite 43 einer Seitenwand 14 gebildet. Zusätzlich sind an der Außenseite 42 der Stirnwand 15 und dazu entsprechend passend an der Außenseite 43 der Seitenwand 14 ein männliches und ein weibliches Eingriffelement 44, 45 vorgesehen, die im geschlossenen Zustand der Schalung ineinandergreifen. Hier ist bevorzugt das männliche Eingriffelement 45 an der Stirnwand 15 und das weibliche Eingriffelement 44 an der Seitenwand 14 angeordnet, sodass das männliche Eingriffelement 45 ein Bewegen der Seitenwand 14 im geschlossenen Zustand der Stirnwand 15 verhindert. Durch Anziehen und Halten des Bewegungselements 41 des Aktivators 35 wird die Stirnwand 15 an ihrem äußeren Ende 42 auf die Seitenwand 14 an ihrem äußeren Ende 43 angepresst. Gleichzeitig greift das männliche Eingriffelement 45 in das weibliche Eingriffelement 44 und sperrt dadurch zusätzlich zum Anziehen und Halten des Bewegungselements 33 des Aktuators 32, sodass die Seitenwand 14 nicht vom Boden 16 gelöst werden kann, solange die Stirnwand 15 am Boden 16 anliegt. Durch das Anziehen und Halten des Bewegungselements 41 des Aktivators 35 am äußeren Ende 42 wird gleichzeitig bevorzugt in Verbindung mit den Eingriffelementen 44, 45, ein Öffnen der Ecken 46, gebildet zwischen den Seitenwänden 14 und den Stirnwänden 15, effektiv und einfach vermieden.

Ein Ablösen der Seitenwände 14 und der Stirnwände 15 vom Boden 16 beispielsweise durch Lastverformung durch den eingebrachten Beton wird durch das Verteilen der Schwenkverbindungen 13, 26 entlang der Seitenwände 34, 47 der Basis 12 verhindert.

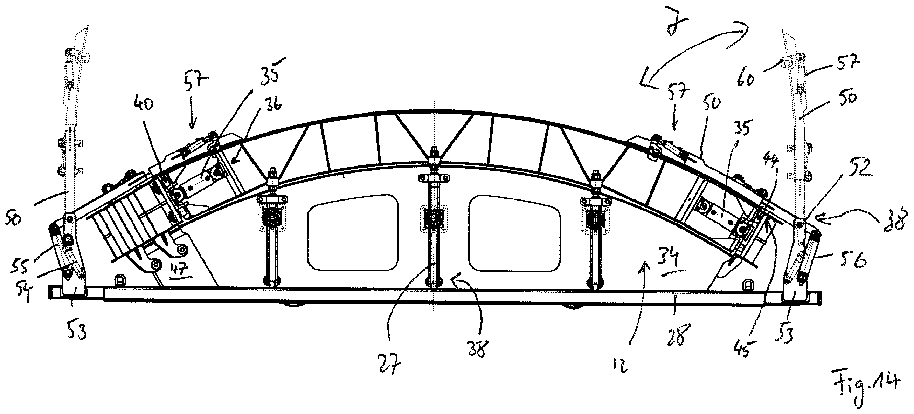

Weiterhin weist die Schalung 10 zwei Deckel 50 auf, die an der Basis 12 angebracht sind und während des Herstellungsprozesses des Betontübbings 500 entweder geschlossen, wie in Figur 11 dargestellt, oder geöffnet, wie in Figur 13 und 14 dargestellt, sind.

Die Deckel 50 können in Doppelpfeilrichtung J zwischen der geschlossenen Position auf dem Innenraum 17 und der geöffneten Position verschwenkt werden. Sie dienen dazu, die Schalung 10 bzw. deren Innenraum 17 nach oben zu schließen, wenn der Beton in den Innenraum 17 eingefüllt wird. Bei der Tübbingherstellung sind Schalungen 10 bekannt mit Teildeckeln, wie die Deckel 50 in der zweiten Ausführungsform der erfindungsgemäßen Schalung 10 hier gezeigt sind, oder auch ohne Deckel 50, wie dieses in der ersten erfindungsgemäßen Ausführungsform beispielhaft der Fall ist. Die nicht überdeckten Bereiche werden vor dem Befüllen der Schalung 10 mit Beton mit einem Deckel geschlossen, wobei noch offene Bereiche vorhanden sind, durch die dann der Beton in den Innenraum 17 eingefüllt wird. Das Anbringen dieser zusätzlichen Deckel erfolgt vor oder in der Betonierarbeitsstation.

Sind wie hier im zweiten Ausführungsbeispiel Deckel 50 an der Schalung 10 vorgesehen, die zwischen einer geöffneten und einer geschlossenen Position bewegt werden können, so werden diese in oder vor der Betonierarbeitsstation geschlossen. Nach dem Betonieren werden die Deckel entweder entfernt oder wieder geöffnet, um die Oberfläche 520 des rohen Betontübbings in einer entsprechenden weitern Arbeitsstation/in einem weiteren Arbeitsschritt zu bearbeiten. Nach Abschluss dieses Arbeitsschritts werden die Deckel 50 wieder geschlossen. Anschließend werden die Schalungen 10 mit geschlossenen Deckeln 50 der Härtestation zugeführt. Innerhalb der Härtestation bleiben die Deckel 50 dann entsprechend geschlossen. Nachdem die Härtung abgeschlossen ist, werden die Deckel 50 geöffnet. Anschließend werden auch die Seitenwände 14 und die Stirnwände 15 in notwendiger Reihenfolge geöffnet. Hiernach ist der vorgehärtete Betontübbing 500 entnehmbar.

Nach der Entnahme des Betontübbings 500 wird die Schalung 10 entsprechend gereinigt und für die Herstellung eines neuen Betontübbings 500 vorbereitet, wie zuvor beschrieben. Je nach Möglichkeiten des Transports werden die Seitenwände 14, Stirnwände 15 und Deckel 50 entweder geschlossen oder bleiben im geöffneten Zustand. In der Reinigungsstation müssen dann die Deckel 50, Stirnwände 15 und Seitenwände 14 ggf. wieder geöffnet werden, damit eine vollständige Reinigung vollzogen werden kann. Im Anschluss an die Reinigung werden dann die Seitenwände 14 und die Stirnwände 15 geschlossen. Der Innenraum 17 wird dann mit entsprechender Bewehrung und Einbauteilen bestückt. Ist dieses abgeschlossen, wird anschließend wie zuvor beschrieben die Schalung 10 auf das Betonieren vorbereitet.

Die Deckel 50 sind mit Verbindungselementen 51 versehen, die über eine Schwenkverbindung 52 mit der Basis 12 verbunden sind. Die Schwenkverbindung 52 ist dabei an einem Vorsprungelement 53 drehbar angeordnet. Vorgesehen ist ein Aktuator 54, der parallel zum Vorsprungelement 53 mit der Basis 12 verbunden ist. Das Verbindungselement 51 erstreckt sich über die Schwenkverbindung 52 hinaus. An diesem Teil des Verbindungselement 51 greift dann das Bewegungselement 55 des Aktuators 54 an. Durch Ein- und Ausfahrt des Bewegungselements 55 wird der Deckel 50 in Doppelpfeilrichtung J um den in der Schwenkverbindung 52 befindlichen Drehpunkt 38 verschwenkt. Um ein besseres Öffnen und Schließen bzw. Durchführen der Schwenkbewegung in Pfeilrichtung J zu gewährleisten, sind Federelemente 56 zur Unterstützung vorgesehen.

Bei dem Aktuator 54 handelt es sich hier bevorzugt um einen Hydraulikzylinder. Das Bewegungselement 55 stellt dabei die Kolbenstange des Hydraulikzylinders dar. Der Aktuator 54 bewirkt neben dem Öffnen und Schließen auch das Halten des Deckels 50 in der jeweiligen Position.

Zusätzlich sind zur Sicherung am Deckel 50 Sicherungselemente 57 vorgesehen, die mit einem Aktuator 58 versehen sind, der ein Bewegungselement 59 aufweist. Das Bewegungselement 59 ist verbunden mit einem Sperrelement 60, dass über das Ein- und Ausfahren des Bewegungselements 59 zwischen einer Verriegelungspositionen einer freien Position bewegbar ist, hier bevorzugt verschwenkbar. An den Seitenwänden 14 bzw. Stirnwänden 15 sind zum Verriegeln Eingrifföffnungen 61 vorgesehen, in die das Sperrelement 60 zum Verriegeln eingreift. Das Verriegeln erfolgt beispielsweise während des Härtens.

Zur Steuerung der Aktuatoren der Schalung 10, wenn diese als Hydraulikzylinder ausgeführt sind, sind diese Teil eines Hydraulikkreislaufes. Die Aktoren werden nachfolgend als Hydraulikzylinder bezeichnet. Hierbei sind die Hydraulikzylinder 32 zum Öffnen und Schließen der Seitenwände und die Hydraulikzylinder 35 zum Öffnen und Schließen der Stirnwände so vorgesehen, dass die Wände schließen, wenn der Hydraulikzylinder einfährt. Die Hydraulikzylinder 54 des Deckels 50 und die Hydraulikzylinder 58 zum Betätigen der Sperrelemente 60 sind dabei so angeordnet, dass der Deckel 50 und das Sperrelement 60 schließen, wenn der Hydraulikzylinder einfährt.

An den jeweiligen Arbeitsstationen, an denen die Hydraulikzylinder betätigt werden müssen, wird über einen Anschluss der Hydraulikkreislauf an ein nicht dargestelltes Hydraulikaggregat angeschlossen. Das Aufbringen der haltenden Kraft der Hydraulikzylinder nach dem Verschließen der Seitenwände 14 und Stirnwände 15 sowie nach dem Verschließen der Deckel 50 und der Sperrelemente 60 muss nach Abkoppeln des Hydraulikkreislauf der Schalung 10 vom Antriebsaggregat bestehen bleiben.

Das Halten der notwendigen Verschlusskräfte erfolgt durch in den Hydraulikkreislauf eingebrachte Lasthalteventile (nicht dargestellt). Die Lasthalteventile bewirken, dass die in den Hydraulikzylinder eingebrachte Hydraulikflüssigkeit nicht aus diesem wieder zurückfließen kann, nachdem das Hydraulikaggregat den Hydraulikkreislauf nicht mehr mit Hydraulikflüssigkeit beaufschlagt, wodurch der Druck auf die Kolbenfläche des Hydraulikzylinders konstant bleibt.

Um Druckschwankungen/Volumenänderungen im Hydraulikkreislauf beispielsweise aufgrund von Temperaturänderungen in der Härteanlage entgegenzuwirken, sind an entsprechenden Stellen im Hydraulikkreislauf Ausgleichelemente vorgesehen. Hierbei kann es sich beispielsweise um Membranspeicher oder Blindzylinder handeln.

Welche Zylinder zuerst mit Hydraulikflüssigkeit beaufschlagt werden, ergibt dabei die notwendige Steuerungsreihenfolge. Zwischen den einzelnen Zylindern können zur Abfolge der Steuerung der einzelnen Bewegungen schaltbare Sperrelemente vorgesehen sein. Bevorzugt handelt es sich hierbei um Druckfolgeventile.

Anschließend wird das erfindungsgemäße Verfahren anhand des gezeigten bevorzugten Ausführungsbeispiels beispielhaft näher erläutert.

An ersten Arbeitsstation 210 wird die Schalung 10 mit dem Transportmittel 112 vom Querförderer 400 in die Produktionslinie 200 eingeführt. In der Schalung 10 ist zu diesem Zeitpunkt der vorgehärtete Tübbing 500. Die Schalung 10 ist geschlossen die Seitenwände 14 und/oder die Stirnwände 15 befinden sich miteinander verschraubt in Verbindung. Zusätzlich können zu diesem Zeitpunkt die Deckelelemente (nicht dargestellt) noch in geschlossener Stellung vorgesehen sein.

Die Schalung 10 wird an der ersten Arbeitsstation 210 positionsgenau angeordnet. Gleichzeitig wird bevorzugt die Schalung und/oder der Tübbing gescannt und erfasst. Hierfür werden beispielsweise Beschriftungen oder RFID-Chips mit den geeigneten Werkzeugen ausgewertet.

Die ermittelten Daten werden in ein Datenverarbeitungssystem eingegeben.

Gleichzeitig wird basierend auf diesen Daten beispielsweise von einer speicherprogrammierbaren Steuerung der notwendige Arbeitsschritt ausgewählt und die entsprechenden Steuerbefehle an den Roboter 140 zur Auswahl des entsprechend dafür benötigten Werkzeugs und zur Durchführung des Arbeitsschritts übermittelt.

An den ersten Arbeitsstation 210 wäre dieses hier beispielsweise, sofern erforderlich, dass Abschrauben der Deckel bzw. dessen Öffnen durch Lösen von Schraubenverbindungen oder Klemmverbindungen, das Entfernen der Betoneinbauteile 26, insbesondere durch Herausschrauben, das Lösen der Eckverbindungen zwischen den Stirnwänden 15 und den Seitenwänden 14, beispielsweise durch Lösen der Schraubverbindung 18, in dem die Schraube 19 mittels des Werkzeugs 150, hier dann ein Drehmomentschrauber, herausgeschraubt wird, oder das Lösen einer Klemmverbindung, Öffnen der Stirnwände 15 und/oder der Seitenwände 14, beispielsweise durch Verschwenken um die Schwenkverbindung 13, beispielsweise mit einem Antrieb wie einer Zentralspindel oder Hydraulikzylindern.

Nach Abschluss des Arbeitsschritts kann ein Scanvorgang durchgeführt werden, ob der Arbeitsschritt adäquat durchgeführt und abgeschlossen wurde, indem beispielsweise Abstände der Seitenwände 14 und oder der Stirnwände 15 zueinander vermessen werden.

Die entsprechenden hierbei ermittelten Daten werden beispielsweise wieder an das Datenverarbeitungssystem übermittelt, das dann, wenn entsprechende Parameter eingehalten sind, nach einer Prüfung derselben eine Freigabe zum Weitertransport zur nächsten Arbeitsstation erteilt.

Im abgeschlossenen Zustand ist beispielsweise nach der Arbeitsstation 210 die Schalung geöffnet.

Bereits an der ersten Arbeitsstation 210 könnte gegebenenfalls, eingegliedert in das Steuerungssystem und auch durch dieses angesteuert, die Entnahme des Tübbing 500 aus der Schalung 10 erfolgen. Hierfür könnte ein Kran (nicht dargestellt) mit einer entsprechenden Hebeeinheit (nicht dargestellt) vorgesehen sein, um den Tübbing 500 aus der Schalung 10 zu entnehmen.

Alternativ, wie hier vorgesehen, erfolgt dieser Schritt an der zweiten Arbeitsstation 220. Nach der positionsgenauen Übergabe, die zwischen allen Arbeitsstationen beispielsweise auch über das Datensystem in Verbindung mit der speicherprogrammierbaren Steuerung vorgenommen wird, befindet sich die Schalung 10 positionsgenau an der zweiten Arbeitsstation 220. Auch hier erfolgt wiederum entsprechend eine Erkennung und Erfassung der Schalung und/oder des Tübbings 500. Wie bereits zuvor beschrieben wird hier jetzt beispielhaft der vorgehärtete Tübbing 500 aus der Schalung 10 entsprechend entnommen, um die weiteren Schritte wie beispielsweise dem Verbringen des vorgehärteten Tübbings 500 in ein Aushärtungslager einzuleiten.

Anschließend kann wiederum eine entsprechende Überprüfung erfolgen. Auch diese Daten werden wiederum an das Datensystem übergeben. Nach Prüfung und Freigabe wird die Schalung 10, die hier immer noch als eine geöffnete Schalung vorliegt, dann zur dritten Arbeitsstation 230 transportiert. Die Schalung 10 ist zu diesem Zeitpunkt leer, geöffnet und ungereinigt.

Auch an der dritten Arbeitsstation 230 wird die Schalung 10 positionsgenau eingebracht. Zusätzlich kann die Schalung 10 hier entsprechend wiederum erkannt werden. Gegebenenfalls kann zu diesem Zeitpunkt auch noch eine Zustandsermittlung der Schalung 10 durchgeführt werden, insbesondere hinsichtlich der Positionen und Aufklappwinkel der einzelnen Wände 14, 15.

Basierend auf diesen Daten übermittelt die speicherprogrammierbare Steuerung die entsprechenden Informationen und Arbeitsanweisungen an den Roboter 140.

Die Traverse 130 und/oder die Basis 131 des Roboters 140 werden an die jeweils notwendigen Anfahrpunkte verfahren. Weiterhin wird der Roboter 140 mit dem entsprechenden Werkzeug 150 bestückt, beispielsweise, indem der Roboter 140 sich mit dem entsprechenden Werkzeug 140 an einem Aufbewahrungsort verbindet und diese entnimmt.

Anschließend wird der entsprechende Arbeitsschritt durchgeführt, wobei es zu einer Überlagerung der Bewegungen der Traverse, der Basis sowie der Bestandteile des Roboters 140 kommen kann, um den entsprechenden Arbeitsschritt durchzuführen. Sofern nicht anders erforderlich können auch vorgenannte Bewegungen zur Optimierung dabei weggelassen werden.

An der dritten Arbeitsstation 230 wird jetzt entsprechend eine Reinigung der geöffneten Schalung 10 und eine Vorbereitung der später Beton berührenden Oberflächen der Schalung 10 wie beispielsweise der Boden 16, die Innenflächen der Seitenwände 14 und Stirnwände 15 sowie der Betoneinbauteile 26 durch Aufbringen von einem Trennmittel, wie beispielsweise Schalungsöl, durchgeführt.

Dafür wird als Werkzeug beispielsweise eine Hochdruckdüse zum Ausspritzen oder Ausblasen der Schalungsteile und/oder einer Bürste zur Reinigung ausgewählt. Die Reihenfolge ist dabei gemäß den Erfordernissen auszuwählen.

Zusätzlich kann beispielsweise auch ein Ausblasen der Formteile mit Druckluft über eine Düse erfolgen.

Gleiches gilt auch für einen eventuell vorhandenen Deckel und insbesondere auch für Ausnehmungen, in die später Einbauteile wie Dichtungen, Erektordübel oder andere Kunststoffteile eingesetzt werden.

Nach dem Abschluss der Reinigung kann dann wiederum ein Scanvorgang durchgeführt werden, um die Qualität der Reinigung entsprechend zu überprüfen.

Hierfür wird beispielsweise ein optisches Werkzeug ausgewählt, was beispielsweise anhand von Reflexionen oder dergleichen den Reinigungsgrad ermittelt. Die entsprechenden Daten werden wiederum an das Datenverarbeitungssystem und die Steuerung übergeben.

Im Anschluss daran erfolgt dann wiederum mit einem entsprechend geeigneten Werkzeug wie beispielsweise einer Düse das Einbringen des Trennungsmittels in die Schalung, ggf. gefolgt von einer erneuten Überprüfung.

Alternativ kann auch zuerst bevor das Trennungsmittel eingebracht wird, die Schalung geschlossen werden. Hierfür werden dann entsprechend in der vorliegenden Ausführungsform die Stirnwände 15 und/oder die Seitenwände 14 beispielsweise über einen Antrieb, hier beispielsweise eine Zentralspindel, die vom Drehmomentschrauber angetrieben wird, in eine Verschlussposition gebracht. Anschließend werden die Schraubverbindungen 18 zusammengeschraubt, indem beispielsweise eine entsprechende Nuss 152 auf den Kopf 27 der Schraube 19 aufgesetzt wird und diese dann gegen das Federelement 23 in das Gewindeelement 20 eingeschraubt wird.

Nach Abschluss der Schraubvorgänge kann dann wiederum eine Überprüfung mittels Scaneinheit des Hauptzustands durchgeführt werden. Alternativ ist es auch möglich, den Reinigungs- und Vorbereitungsschritt und den Schritt zum Schließen der Schalung 10 hinsichtlich der Arbeitsstationen aufzuteilen.

Nach Abschluss der Arbeitsschritte an der dritten Arbeitsstation 230 ist die Schalung 10 gereinigt, das entsprechende Trennmittel aufgebracht, und die Schalung ist entsprechend geschlossen.

Zusätzlich können auch die Betoneinbauteile 26 in den Innenraum 17 der Schalung 10 hinein bewegt worden sein, beispielsweise indem diese vom Drehmomentschrauber als Werkzeug 150 durch Schrauben bewegt wurden.

Ggf. nach Abschluss eines entsprechenden Scanschrittes kann dann die Freigabe zum Bewegen der Schalung 10 zur vierten Arbeitsstation 240 erfolgen.

Die Überprüfung eines oder aller Arbeitsschritte kann alternativ auch losgelöst vom System durch einen Mitarbeiter erfolgen, der dann entsprechend die Freigaben manuell an das System übergibt.

Anschließend wird die Schalung 10 positionsgenau in der vierten Arbeitsstation 240 angeordnet. Die Schalung wird sofern notwendig entsprechend wiederum erkannt. Weiterhin werden die Einbauteile, die der entsprechend jetzt zu fertigende Tübbing 500 enthalten soll, entsprechend in die vorbereitete Schalung eingebracht. Hierfür werden wiederum gezielte Werkzeuge 150 ausgewählt. Das Bewegen des Roboters 140 sowie des Werkzeugs 150 erfolgt wiederum durch eine Kombination der möglichen Schritte Verfahren der Traverse 130, der Basis 131 gegenüber der Traverse 130 und dem entsprechenden gesteuerten Antreiben der Arme 141, Schwenk- und Drehgelenke 142,143 sowie der damit in Verbindung stehenden Antriebe 144.

In die Schalung 10 eingebracht werden können beispielsweise ein vorgefertigtes Schutzelement, Randdichtungen, Kunststoffeinbauteile, Erektordübel, Entwässerungselemente, Temperatursensoren, Feuchtigkeitssensoren oder dergleichen.

Als Werkzeug 150 hierfür werden entsprechende Greifer mit dem Roboter 140 verbunden. Der Roboter 140 platziert die entsprechenden Einbauelemente gemäß den im Datensystem hinterlegten Positionen, wozu er von der speicherprogrammierten Steuerung die entsprechenden Steuerungsdaten erhält. Weiterhin wird entweder manuell oder ebenfalls gesteuert beispielsweise mittels eines Krans (nicht dargestellt) ein Bewährungskorb 151 oder andere Bewährungselemente in die Schalung 10 eingebracht.

Das Einbringen kann dann wiederum von einem entsprechenden Überprüfungselement überprüft werden.

Zusätzlich können Deckelelemente angebracht und/oder geschlossen werden. Weiterhin kann ggf. erneut eine Überprüfung der korrekten Anordnung der Seitenwände 14 und/oder Stirnwände 15 erfolgen.

Nach Überprüfung und Freigabe wird dann die vollständig vorbereitete Schalung 10 zur fünften Arbeitsstation 250 zum Einbringen des Beton sin die vorbereitete Schalung 10 überführt.

In der fünften Arbeitsstation 250 wird die Schalung 10 wiederum positionsgenau angeordnet und wie zuvor beschrieben ggf. erfasst. Weiterhin wird basierend auf dem zu erstellenden Tübbing 500 die Betonzusammensetzung und die Betonmenge entsprechend vorbereitet. Dieses erfolgt bevorzugt wiederum basierend auf den Daten des Datenverarbeitungssystems in Kombination mit der speicherprogrammierbaren Steuerung.

Weiterhin ist es sinnvoll, um beispielsweise die entsprechende Härtungszeit ermitteln zu können, zusätzlich beim Betonieren weitere Parameter zu erfassen, wie beispielsweise Temperatur und Feuchtigkeit. Diese Daten können dann zusammen mit den Daten hinsichtlich Betonzusammensetzung und Menge zur Steuerung der Arbeitsschritte entlang der Härtelinie 320 verwendet werden.

Weiterhin kann in der fünften Arbeitsstation 250 entsprechend die Verdichtung des Betons in der Schalung 10 in bekannter Art und Weise erfolgen.

Je nach Anforderung kann auch hier bereits eine Behandlung der Oberfläche des geschüttelten Tübbings 500 sowie ein Entfernen der Deckel erfolgen.

Zusätzlich kann auch hier wiederum ein entsprechender Überprüfungsschritt durchgeführt werden. Erfolgt dieser wie zuvor beschrieben positiv, kann dann die gefüllte Schalung 10 an die sechste Arbeitsstation 260 übergeben werden.

Nach entsprechender positionsgenauer Anordnung und ggf. Scannen bzw. Erfassen der Schalung und/oder des jetzt gefüllten Tübbings erfolgt die Glättung der Betonoberfläche des Tübbings 500 entweder in den nicht von Deckeln geschlossenen Bereich oder über die gesamte Fläche, wenn beispielsweise die Deckel geöffnet oder entfernt werden. Auch dieses kann beispielsweise automatisiert erfolgen. Auch hierfür kann beispielsweise ein zuvor beschriebenes verfahrbares Robotersystem mit entsprechenden Werkzeugen verwendet werden.

Nach Überprüfung und Freigabe wird die Schalung 10 mit dem darin befindlichen rohen Tübbing 500 beispielsweise über den Querförderer 400 einer Härtelinie 320 des Härtetunnels 300 zugeführt. Nach entsprechend gesteuerten Durchlaufens des Härtetunnels 300 wird die Schalung 10 mit dem dann vorgehärteten Tübbing 500 beispielsweise mit dem weiteren Querförderer 400 der ersten Arbeitsstation 210 der Produktionslinie 200 zugeführt.

Dem Fachmann ist klar, dass in Abhängigkeit der jeweiligen Projektanforderungen Arbeitsstationen und/Arbeitsschritte weggelassen, hinzugefügt, anders angeordnet oder verteilt werden können. Auch ist es möglich, dass die zuvor genannten Arbeitsschritte lediglich an einer Arbeitsstation bzw. an mehr oder weniger Arbeitsstationen als beschrieben durchgeführt werden.

Die Steuerung des zuvor beschriebenen Verfahrens bzw. der Produktionsanlage 100 erfolgt dabei wie beschrieben mittels einer speicherprogrammierbaren Steuerung in der die entsprechenden Arbeitsschritte und die dazugehörigen Positionen des Roboters 140 sowie der jeweiligen Werkzeuge 150 hinterlegt bzw. verarbeitet werden. Kombiniert ist dieses mit einem entsprechenden Datenverarbeitungssystem/Datenspeichersystem in dem die entsprechenden Parameter hinterlegt sind bzw. die entsprechenden Daten der Sensoren bzw. Erfassungswerkzeuge hinzugefügt werden und der Steuerung entsprechend für die Durchführung der einzelnen Arbeitsschritte bereitgestellt werden.

Mit der zuvor beschriebenen Produktionsanlage 100 sowie dem beschriebenen Verfahren in Verbindung mit der beschriebenen Steuerung ist es möglich, die Arbeitssicherheit zu erhöhen. Weiterhin lässt sich Material einsparen, wobei ein präzises und gleichbleibendes Verwenden der Materialien erfolgt. Weiterhin ist es möglich, ein hohes und konstantes Qualitätsniveau zu erreichen und einzuhalten. Weiterhin kann für jeden einzelnen Tübbing der Herstellungsprozess dokumentiert werden mit den entsprechenden Überprüfungsdaten. In Verbindung mit der Kennzeichnung der einzelnen Tübbings ist es des Weiteren möglich, somit für jedes einzelne Element im fertiggestellten Tunnel den entsprechenden Herstellungsprozess zu dokumentieren. Weiterhin ist es auf einfache Weise möglich das Verfahren und die Produktionsanlage 100 durch Veränderungen in der Steuerung sowie durch Änderungen an Werkzeugen kontinuierlich zu verbessern bzw. eine Wiederverwendung der einzelnen Komponenten nach Abschluss des Tunnelbauprojekts zu ermöglichen.

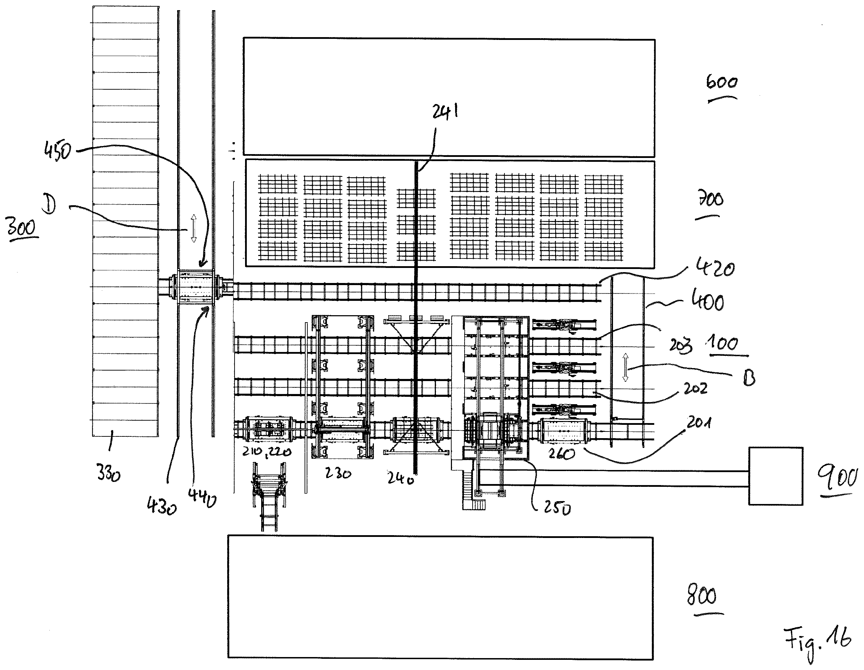

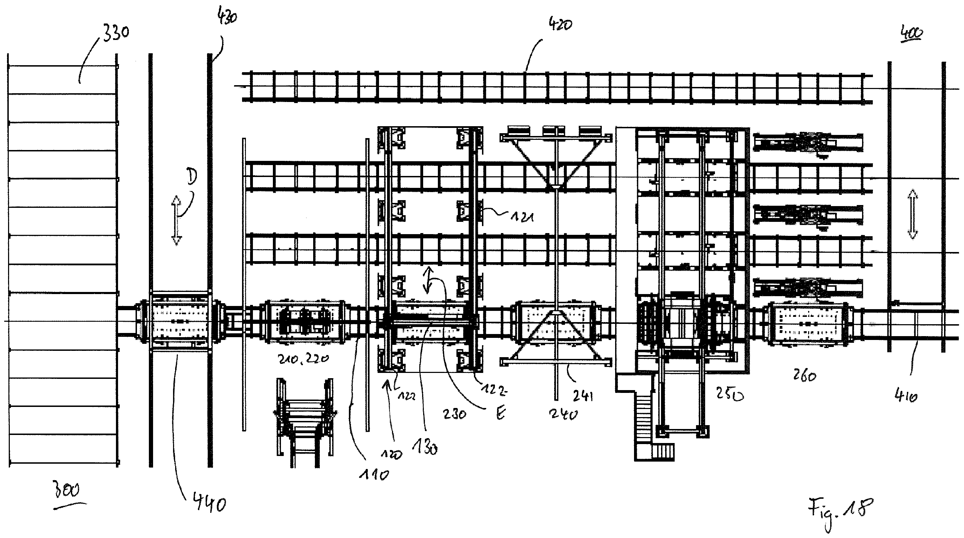

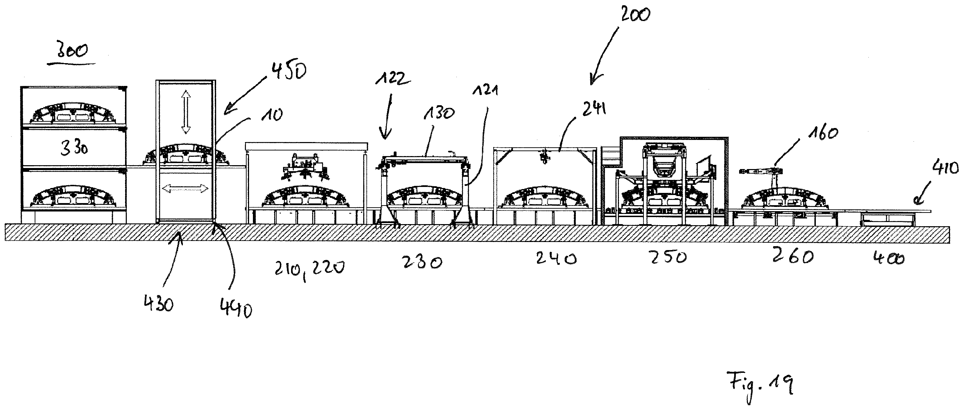

Die Figuren 16-23 zeigen eine zweite Ausführungsform einer erfindungsgemäßen Produktionsanlage 100. Die Produktionsanlage 100 ist dabei beispielsweise als Umlaufanlage ausgeführt. Der Produktionsanlage vorgeschaltet ist eine Anlage zur Herstellung von Bewährungskörben 600, in der automatisiert beispielsweise mittels Schweißrobotern die Bewehrungen für die Tübbinge 500 hergestellt werden. Die fertig hergestellten Bewehrungskörbe werden in eine Bewehrungskorblager 700 zwischengelagert, um sicherstellen zu können, dass die Tübbingproduktion der Produktionsanlage 100 von Liefer- und Qualitätsproblemen externer Bewehrungskorbproduktionen entkoppelt wird. An die Produktionsanlage 100 angeschlossen ist ein Lager für die fertigen Betontübbinge, in dem diese ihre abschließende Härte zu dem Einbau in den Tunnel durch zeitliche Lagerung erreichen. Die Produktionsanlage 100 weist weiterhin eine Härteanlage 300 auf.

Die Produktionsanlage 100 weist dabei mehrere Produktionslinien 201, 202, 203 auf. In diesem Ausführungsbeispiel sind die einzelnen Produktionslinien 201, 202, 203 jeweils mit einem Transportweg 110 versehen. Der Transportweg 110 weist eine Fahrbahn 111, hier in Form von Schienen, auf, auf der die Schalungen 10 beispielsweise mit Rädern 29 verfahrbar sind.

Die Produktionslinien 201, 202, 203 weisen jeweils Arbeitsstationen 210, 220, 230, 240, 250, 260 wie zuvor beschrieben auf, wobei die Arbeitsstationen 210 (Öffnung der Schalung) und 220 (Entnahme des Tübbings 500) hier zusammengefasst sind. Weiterhin parallel angeordnet sind die Arbeitsstationen 230, in der eine Reinigung und Vorbereitung der Schalung 10 zur Aufnahme der neuen Bewehrung und der Einbauteile vorgesehen ist. Ebenfalls parallel angeordnet sind die Arbeitsstationen 240, bei der das Einbringen der Bewehrung aus dem Bewährungslager 700 erfolgt. Daran angeschlossen ist die Betonierarbeitsstation 250 des Tübingens 500 in der Schalung 10. Der Beton wird von einer Betonanlage 900 zugeführt.

Im Anschluss daran ist eine Glättungsstation 260 zur Glättung der Oberfläche des Tübingens 500 vorgesehen. Die Stationen 260 sind ebenfalls parallel vorgesehen. Im Anschluss an die Produktionslinien 201, 202, 203 ist ein Querförderer 400 vorgesehen, auf dem ein Fahrelement 410 verfahrbar in Doppelpfeilrichtung B ist. Auf das Fahrelement 410 kann die Schalung 10 auffahren, damit sie einem Rückförderer 420 zugeführt werden kann. Dieser verläuft parallel zu den Produktionslinien 201, 202, 203.

Die Produktionsanlage weist somit innerhalb der Produktionslinien 201, 202, 203 15 Plätze auf, an denen sich Schalungen 10 befinden können, damit mit ihnen Arbeitsschritte vorgenommen werden. Als weitere Lagerpunkt kann eine Schalung 10 auf dem Fahrelement 410 vorgesehen sein. Weiterhin ist es möglich, dass sich auf dem Rückförderer 420 insgesamt fünf weitere Schalungen 10 befinden können, sodass insgesamt in der Produktionsanlage 20 oder 21 Schalungen 10 vorgesehen sein können, wenn das Fahrelement als Lagerplatz mitberücksichtigt wird.

Zur Entnahme einer Schalung aus dem Rückförderer 420 ist ein weiterer Querförderer 430 vorgesehen, auf dem ein Fahrelement 440 in Doppelpfeilrichtung D verfahrbar ist. Auf dem Fahrelement 440 ist eine Hubvorrichtung 450 vorgesehen, die nachfolgend erläutert wird.

Der Querförderer 430 ist vor einer Härteanlage 300 angeordnet. Die Härteanlage 300 ist hier als ein "Hochregallager" ausgeführt. Sie weist hier bevorzugt drei Ebenen 301, 302, 303 auf, die aus übereinander und nebeneinander angeordneten Härtekammern 310 gebildet sind. Gemäß einem bevorzugten Ausführungsbeispiel sind in der Härteanlage 300 Härtekammern nebeneinander vorgesehen, sodass bei drei Ebenen 301, 302, 303 insgesamt 39 Härtekammern die Härteanlage 300 bilden. Umlaufend können somit 59 bis 60 Schalungen 10 in der zuvor beschriebenen Anlage beispielsweise eingesetzt werden.

Die Härtekammern 310 sind dabei containerartig ausgeführt. Bevorzugt werden die Härtekammern 310 aus Standardcontainern gebildet. Gemäß einer Lehre der Erfindung sind die Härtekammern 310 entweder jeweils einzeln oder in Clustern zusammengefasst und besonders bevorzugt mit einer Klimaregelung (zur Regelung der Temperatur und Feuchtigkeit, nicht dargestellt) versehen. Je nachdem, wie viele Container zu einem temperierten Cluster zusammengefasst werden, werden dann entsprechend die Seitenwände, Decken oder Böden der Härtekammern 310 weggelassen, um eine entsprechende Zirkulation von Wärme und Feuchtigkeit zu gewährleisten.

Die einzelnen Härtekammern 310 können jeweils mit Toren versehen werden, die zur Entnahme bzw. Hinzufügung der einzelnen mit Tübingens 500 versehenen Schalungen 10 geöffnet oder geschlossen werden. Hierbei kann es sich beispielsweise um Folientore oder andere vertikal öffnende Tore handeln. Die Tore sind nicht dargestellt.

In den Härtekammern 310 sind beispielsweise Elemente des Fahrwegs, wie beispielsweise Schienen, vorgesehen, auf denen die Schalungen 10 verfahrbar sind.

Weiterhin ist es möglich, weitere Anordnungen der Härtekammern 310 vorzusehen. Beispielsweise ist es auch möglich, die Härte kann man hintereinander vorzusehen, um daraus einen ein- oder mehrstöckigen Härtetunnel zu erzeugen.

Ein großer Vorteil der so aufgebauten modularen Härtekammern ist, dass diese als Standardelement vorgefertigt werden können, sodass diese vorproduziert zu einer zu errichtenden Produktionsanlage 100 für Tübbinge 500 angeliefert werden können, sodass die Herstellungszeit der Härteanlage 300 sich deutlich reduziert. Weiterhin sind die modularen Härtekammern wiederverwertbar, da sie nach Beendigung der Tübbingproduktion als Module entnommen, in Stand gesetzt und einer neuen Produktionsanlage zugeführt werden können.

Ein weiterer Vorteil ist dabei, dass die Härtekammern 310, wenn sie als Container ausgeführt sind, mit normalen Container-Verbindungsmitteln zum Anordnen von Containern übereinander und nebeneinander wie beispielsweise Twistlocks oder Midlocks oder dgl. verbunden werden können, sodass sich die Montagezeiten eine Härteanlage 300 erheblich reduzieren. Weiterhin sind solche Standardverbindungsteile kostengünstig verfügbar. Auch eine Abspannung dieser Container mit Zurrgeschirr ist entsprechend beispielsweise möglich.

Weiterhin ist insbesondere der Aufbau der Produktionsanlage der zweiten Ausführungsform modular vorgesehen, so dass auch die Bestandteile der einzelnen Arbeitsstationen bzw. Einzelne Arbeitsstationen als ganze Module vorgefertigt und transportiert werden können. Aus diese sind dann nach Beendigung der Tübbingproduktion als Module entfernbar, instandsetzbar und/oder umrüstbar und in einer neu zu errichtenden Produktionsanlage wiedereinsetzbar.

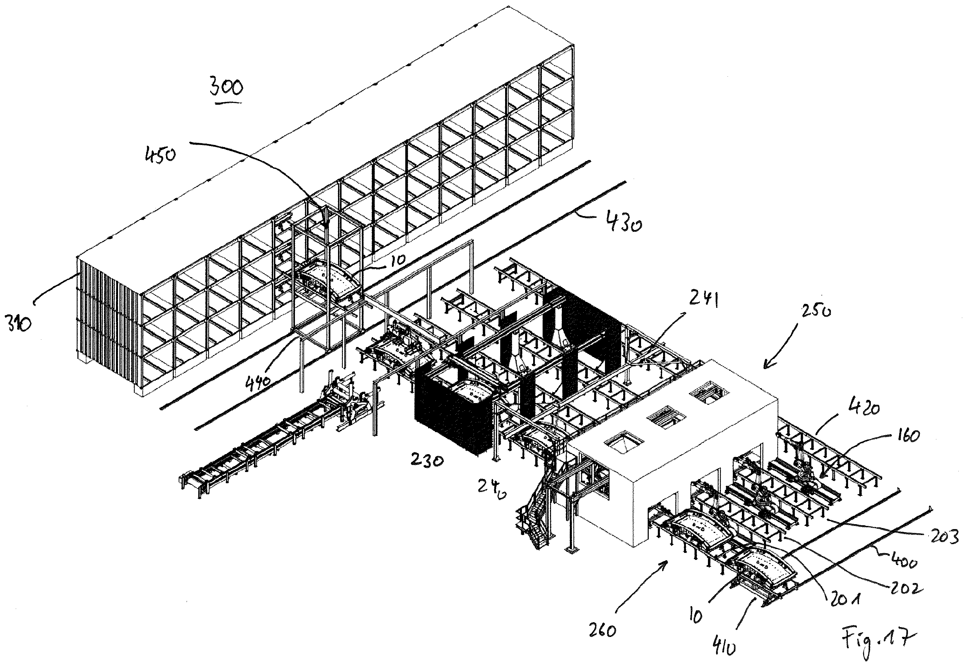

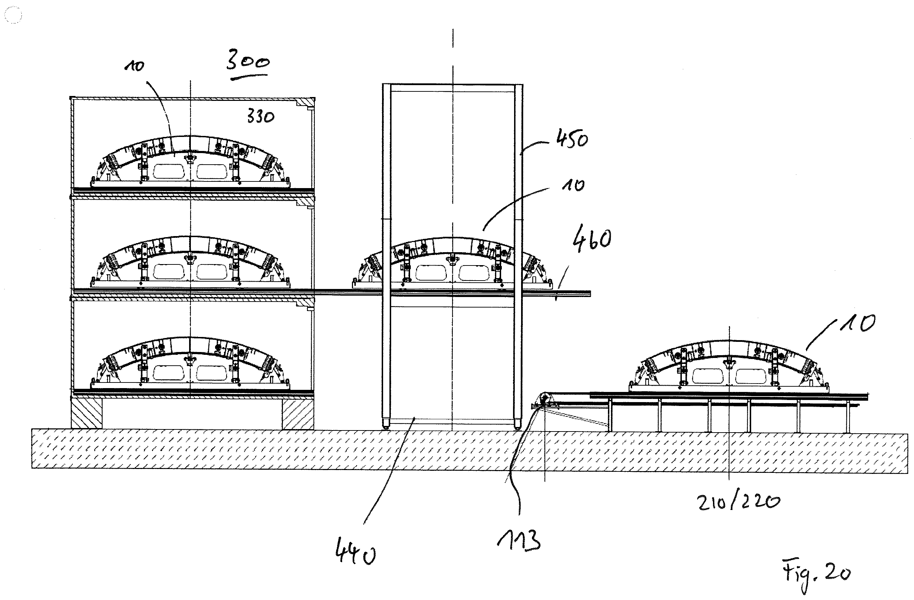

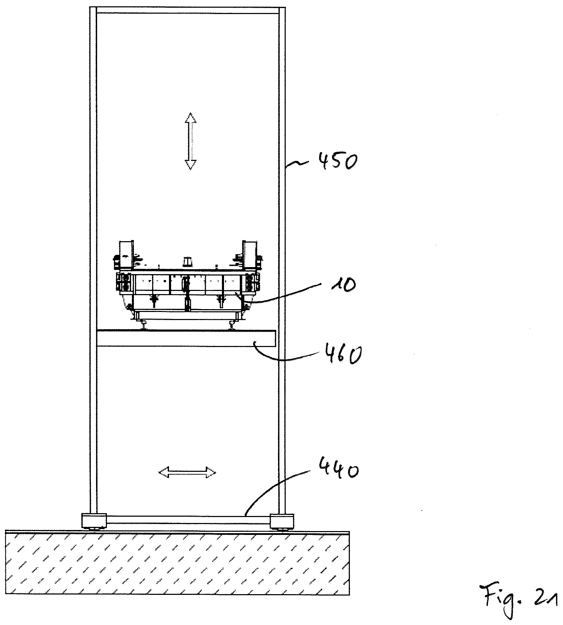

Ist das Fahrelement 400 Doppelpfeilrichtung D verfahrbar. Auf dem Fahrelement 440 ist eine Hubvorrichtung 450 angeordnet. Die Hubvorrichtung 450 weist eine Plattform 460 auf, auf die eine Schalung 10 verfahrbar ist, sodass diese von dem Rückförderer 420 herunter und in eine entsprechende Härtekammer 310 hinein bzw. hinaus und dann wiederum in eine der Produktionslinien 201, 202, 203 hinein verfahrbar ist. Dieses ist beispielsweise in den Figuren 17-21 dargestellt. Figur 20 zeigt dabei eine Seitenansicht der Hubvorrichtung 450 und Figur 21 eine Seitenansicht auf die kurze Seite der Hubvorrichtung 450. Das vertikale Bewegen der Plattform 460 erfolgt dabei mittels geeigneter Antriebsmittel, die nicht dargestellt sind. Gleiches gilt auch beispielsweise für ein Bewegen der Schalung 10 auf die Plattform 460 hinauf bzw. von dieser herunter.

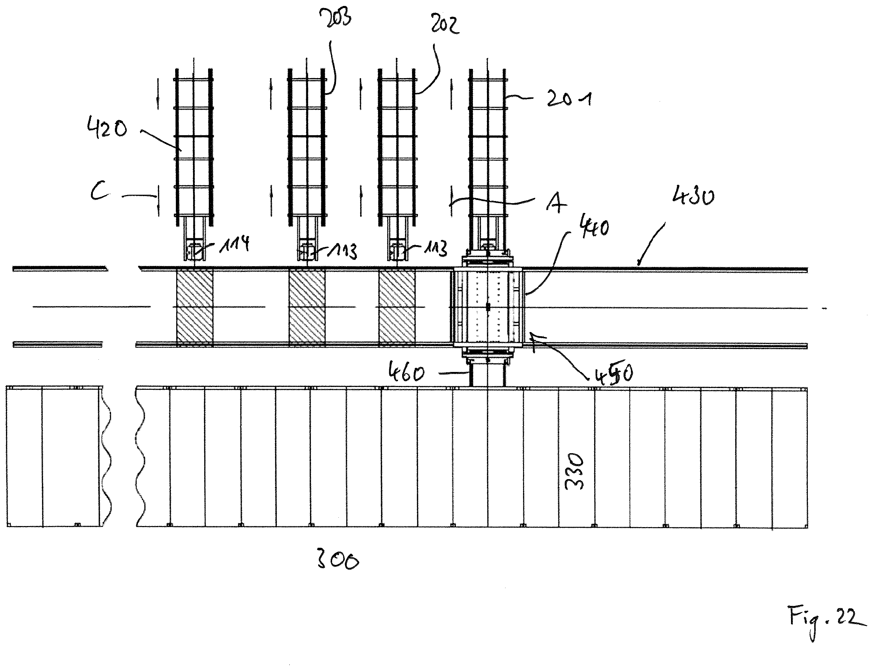

Die Fahrbahnen 111 der Transportwege 110 der Produktionslinien 201, 202, 203 sind jeweils mit einem Antrieb 113 versehen, siehe insbesondere Figuren 20 und 22. Dieser Antrieb ermöglicht beispielsweise das Verfahren der Schalungen 10 in den Produktionslinien 201, 202, 203. Auch der Rückförderer 420 ist entsprechend mit einem Antrieb 114 versehen.

Die parallel angeordneten Arbeitsstationen 230 zur Reinigung und Vorbereitung der Schalung 10 weisen quer zum Transportweg 110 der Produktionslinien 201, 202, 203 einen Fahrweg 120 auf, um eine Automatisierung dieser Arbeitsstationen 230 zu bewirken. Hierfür weist der Fahrweg zwei parallele Fahrspuren auf, die mit einer Traverse 130 verbunden sind. Die Traverse ist auf dem Fahrweg 120 in Doppelpfeilrichtung E verfahrbar. Die Fahrspuren 122 selbst sind auf Pfeilern 121 erhöht vorgesehen. Die Traverse 130 dient dabei als Fahrweg für eine Basis eines Roboter 140, wie dieser zuvor bereits beschrieben wurde. Die Funktionalität des Roboters 140 ist hier entsprechend. Gleiches gilt auch für das Wechseln der Werkzeuge.

Bevorzugt kommen hier ein Bürstenwerkzeug zur Reinigung und ein Sprühwerkzeug zum Aufbringen des Trennmittels zum Einsatz. Das Bewegen des Roboters 140, das Wechseln der Werkzeuge sowie die Anordnung der Werkzeuge sind dabei wie zuvor beschrieben vorgesehen. Unterschiedlich ist hier lediglich, dass mit dem Roboter 140 drei parallel angeordnete gleiche Arbeitsstationen bedient werden, wobei der Fahrweg 120 hier quer zur Produktionslinie 201, 202, 203 und nicht längs wie zuvor beschrieben vorgesehen ist.

An der Arbeitsstationen 240 ist ein horizontal in X- und Y-Richtung verfahrbarer Portalkran 241 vorgesehen. Der Portalkran 241 kann dabei beispielsweise so ausgeführt sein, dass er außerhalb der Produktionsanlage Bewehrungskörbe aufnehmen kann, beispielsweise im Bewehrungskorblager 700, wie dieses in Figur 16 dargestellt ist, und die Bewehrungskörbe dann in den Innenraum 17 der jeweiligen Schalung 10 einbringen kann.

Auch die Betonierstation 250 erstreckt sich quer zu den Produktionslinien 201, 202, 203. Innerhalb der Betonierstation 250 ist ebenfalls ein Fahrweg 120 vorgesehen, der oberhalb der Schalungen 10 angeordnet ist. Der Fahrweg 120 ist hier beispielsweise derart zweigeteilt, dass auf einer ersten Ebene ein automatischer Deckel zum teilweise Verschließen der Schalung 10 bzw. zum teilweise verschließen der noch offenen Bereiche der Schalung 10 vorgesehen ist. Oberhalb davon ist ebenfalls verfahrbar eine Schüttvorrichtung (nicht dargestellt) für den Beton vorgesehen, die entlang des Fahrwegs 120 verfahrbar ist. Das betonieren des Tübbings erfolgt derart, dass im Wechsel Beton in die Schalung 10 eingebracht wird und die Schalung dann für einen Zeitraum ruht oder vibriert wird. Je nach Produktionsschritt sind dann der Deckel und die Schütteinheit entsprechend oberhalb der drei in der Betonierstation möglichen Schalungen angeordnet.

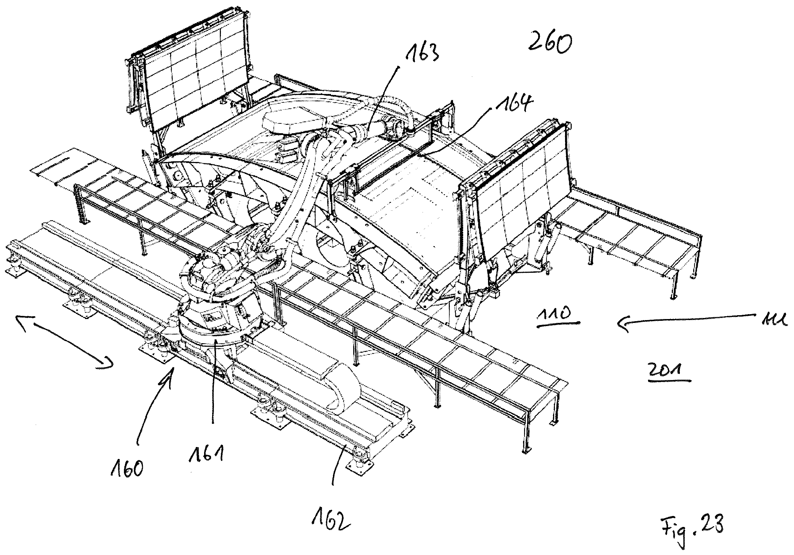

Figur 23 zeigt die Arbeitsstationen 260, an der eine Glättung der Oberfläche des betonierten Tübbings 500 im Innenraum 17 der Schalung 10 dargestellt ist. Die Schalung selbst weist geöffnete Deckel 50 auf. Neben der Schalung 10 bzw. parallel zum Fahrbahn 111 ist ein Roboter 160 angeordnet, der auf einer Basis 161 entlang eines Fahrwegs 162, der sich parallel zur Schalung 10 bzw. zur Fahrbahn 111 auf dem Boden erstreckt, verfahrbar ist. Der Roboter 160 weist einen Knickarm 163 auf, der drehbar auf der Basis 161 angeordnet ist. Am vorderen Ende des Knickarms 163 ist das Werkzeug 164 zum Glätten der Oberfläche des Betontübbings 500 vorgesehen. Es kann sich hierbei um einen Abzieher oder auch um eine angetriebene Glättwalze handeln.

Das Werkzeug 164 wird zum Glätten der Oberfläche des Betontübbings 500 beispielsweise an einem der beiden Enden Betontübbings 500 auf der Oberfläche angesetzt und zwei Drittel über die Oberfläche bewegt. Anschließend wird diese Bewegung vom anderen Enden Betontübbings 500 aus wiederholt. Hierfür wird der Roboter 160 mit seiner Basis 161 entlang des Fahrwegs 162 entsprechend verfahren. Damit jede entsprechende Position mit der entsprechenden Kraft am Werkzeug 164 erreichbar ist, werden der Roboter 160 bzw. der Knickarm 163 entsprechend angesteuert.

Sind besonders große Tübbings 500 an der Oberfläche zu bearbeiten oder müssen stärkere Antriebskräfte erbracht werden, können auch zwei Roboter 160 hier zusammenarbeiten. An jeder Produktionslinie 201, 202, 203 oder auch nur teilweise kann entsprechend ein Roboter 160 in der Station 260 vorgesehen sein. Alternativ können auch nur bei einer ungeraden Anzahl von Produktionslinien die Roboter nur zwischen jeweils zwei Produktionslinien vorgesehen sein.

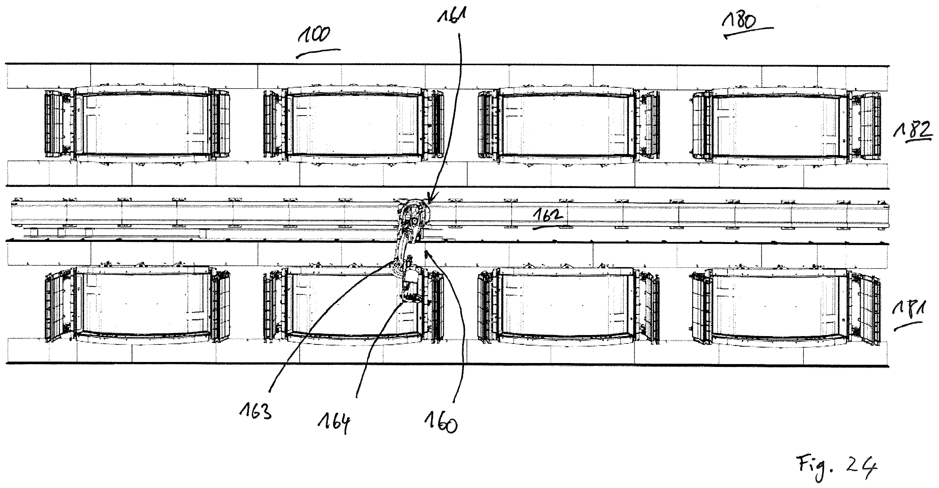

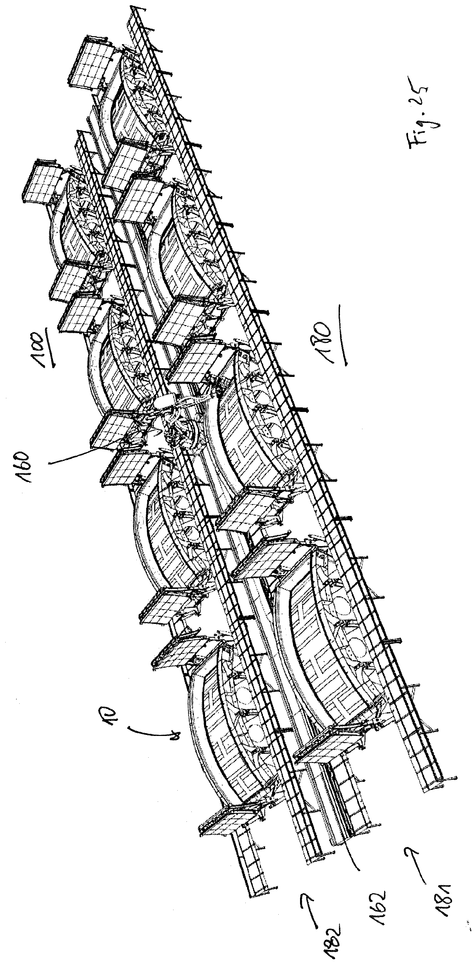

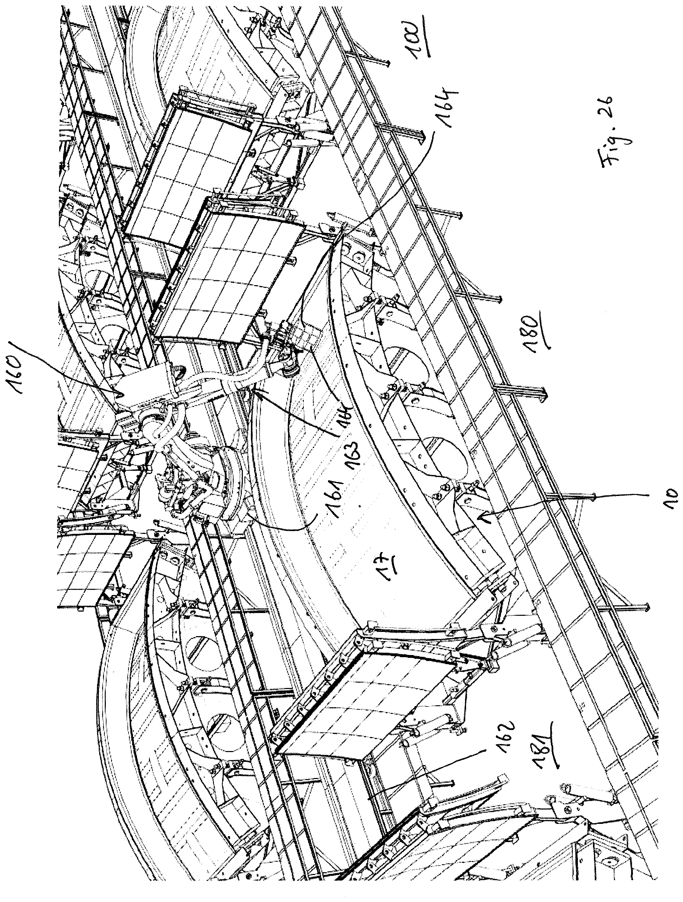

Die Figuren 24-26 zeigen eine dritte erfindungsgemäße Ausführungsform einer Produktionsanlage. Hierbei ist eine Produktionsanlage im Standbetrieb gezeigt. Auf einem Platz 180 sind Schalungen 10 hintereinander in Reihen 181, 182 angeordnet. In vorteilhafter Weise stehen die Schalungen quer zu den Reihen nebeneinander. Zwischen den Reihen 181, 182 ist wiederum ein auf dem Platz 180 angeordnete Roboter 160 vorgesehen, dessen Fahrwegeinheit 162 sich entlang der Reihen 181, 182 und zwischen diesen erstreckt. Der Roboter 160 selber ist dabei wiederum mit einem Knickarm 163 versehen, der auf einer Basis 161 drehbar vorgesehen ist, die entlang des Fahrwegs 162 verfahrbar ist. Am vorderen Ende des Knickabends 163 ist hier ein Werkzeug 164, hier dargestellt eine Reinigungsbürste, angeordnet. Das Werkzeug ist wiederum wie bereits zuvor beschrieben wechselbar. Das Anordnen der Werkzeuge an den einzelnen Schalungen oder am Roboter selber erfolgt ebenfalls wie zuvor beschrieben. Bedingt durch den Aufbau des Roboters ist es möglich, dass das Werkzeug jeden entsprechend notwendigen Punkt an oder in der Schalung 10 erreicht.

Die zuvor beschriebenen Arbeitsstationen werden bei einer stationären Anlage als Arbeitsschritte an den unterschiedlichen Schalungen je nach deren Bearbeitungszustand durchgeführt. Dieses bedeutet, dass der Roboter 160 beispielsweise, nachdem er eine Schalung gereinigt hat und diese anschließend geölt hat, sich zur nächsten Schalung verfährt, an der ein Arbeitsschritt durgeführt werden kann. Gleichzeitig wird dann beispielsweise über einen nicht dargestellten Portalkran oder ein anderes Arbeitsmedium ein Bewährungskorb in diese gerade gereinigte Schalung eingebracht.

An einem anderen Punkt kann bereits jetzt die vollständig vorbereitete Schalung selber betoniert werden. Eine bereits betonierte Schalung wird dann beispielsweise von einem weiteren Roboter 160 zur Oberflächenglättung des Betontübbings angefahren und die Oberfläche beispielsweise wie zuvor beschrieben geglättet.

Ist eine Schalung mit einem fertigen Rohtübbing gefüllt, dessen Oberfläche 520 behandelt wurde, wird beispielsweise nach Schließen der Deckel 50 die Schalung 10 von ihrem Standplatz entnommen und einer Härteanlage 130 zugeführt. Das Entnehmen kann mit einer nicht dargestellten Hubvorrichtung erfolgen.

An den jetzt freien Standplatz wird dann eine entweder leere Schalung oder eine Schalung mit einem gehärteten Tübbing platziert, um dann anschließend die gelehrte Schalung entweder zu reinigen oder den gehärteten Tübbing zu entnehmen, nachdem die Schalung wie zuvor beschrieben geöffnet wurde.

Alternativ kann auch ein Portalsystem der zuvor beschriebenen Art beispielsweise mit einer oder mehreren Traversen, die sich über beide Reihen 181, 182 erstrecken, vorgesehen sein, an denen sich jeweils ein oder auch mehrere verfahrbare Roboter 140 der zuvor beschriebenen Art befinden, um dann von oben entsprechend an den Schalungen 10 zu arbeiten. Hierbei sind verschiedene Anordnungsmöglichkeiten der Fahrwege 120 und Traversen 130 möglich, damit ein oder mehrere Roboter 140 in der Lage sind, sämtliche Schalungen 10 entsprechend zu erreichen und zu bearbeiten.

Das entsprechende Herstellungsverfahren der Tübbinge wie zuvor beschrieben bzw. beansprucht wird dabei bevorzugt auf die Notwendigkeiten der einzelnen zuvor beschriebenen drei unterschiedlichen Ausführungsformen der Produktionsanlagen entsprechend angepasst.

Nachfolgend sind weitere bevorzugte Ausführungsbeispiele hinsichtlich der Produktionsanlage, des Verfahrens und der Steuerung genannt:
1. Produktionsanlage zur Herstellung eines Betontübbings (500) eines Tunnelausbausystems mit wenigstens einer Schalung (10) zur Herstellung des Betontübbings (500), wobei die Produktionsanlage entweder als Umlaufanlage, die wenigstens eine Produktionslinie (200) mit wenigstens zwei Arbeitsstationen (210, 220, 230, 240, 250, 260) und mit wenigstens einem Transportweg (110) zwischen den wenigstens zwei Arbeitsstationen (210, 220, 230, 240, 250, 260) zum Ausführen jeweils wenigstens eines Arbeitsschrittes zur Herstellung des Betontübbings (500) aufweist, oder als Standanlage mit wenigstens zwei stationär angeordneten Schalungen (10), wobei an den Schalungen (10) die notwendigen Arbeitsschritte zur Herstellung des Betontübbings (500) jeweils ausgeführt werden, vorgesehen ist, und mit wenigstens einer Härtestation (300), zum Härten eines in die Schalung (10) zum Herstellen des Betontübbings (500) eingefüllten Betons, **dadurch gekennzeichnet, dass** wenigstens ein Roboter (140) zum Ausführen des wenigstens einen Arbeitsschritt an einer der wenigstens zwei Arbeitsstationen (210, 220, 230, 240, 250, 260) oder wenigstens zwei Schalungen (10) vorgesehen ist, dass wenigstens ein Fahrweg (120) vorgesehen ist, der sich wenigstens teilweise entlang oder quer zu der wenigstens einen Produktionslinie (200) oder entlang oder quer zu der Schalung (10) erstreckt, dass wenigstens ein Fahrelement (130) vorgesehen ist, an dem der wenigstens eine Roboter (140) mit einer Basis (131) angeordnet ist, und mit dem der wenigstens eine Roboter (140) entlang oder quer zu der wenigstens einen Produktionslinie (200) oder Schalung (10) wenigstens teilweise verfahrbar ist.
2. Produktionsanlage nach Ausführungsbeispiel 1, **dadurch gekennzeichnet, dass** die Basis (131) des wenigstens einen Roboters (140) an dem wenigstens einen Fahrelement (130) entlang des Fahrelements (130) in die Arbeitsstation (210, 220, 230, 240, 250, 260) hinein bewegbar ist.
3. Produktionsanlage nach Ausführungsbeispiel 1 oder 2, **dadurch gekennzeichnet, dass** der Fahrweg (120, 162) oberhalb der Arbeitsstation (210, 220, 230, 240, 250, 260) oder der Schalung (10), bevorzugt auf Pfeilern (121), angeordnet ist, oder neben der Arbeitsstation (210, 220, 230, 240, 250, 260) oder der Schalung (10) angeordnet ist.
4. Produktionsanlage nach einem der Ausführungsbeispiele 1 bis 3, **dadurch gekennzeichnet, dass** der Fahrweg (120, 162) jeweils wenigstens eine Fahrspur (122) einseitig oder beidseitig entlang oder quer zu der wenigstens einen Produktionslinie (200) oder Schalung (10) aufweist.
5. Produktionsanlage nach Ausführungsbeispiel 4, **dadurch gekennzeichnet, dass** es sich bei dem Fahrelement (130) um wenigstens eine Traverse handelt, die mit ihren Enden jeweils auf einer Fahrspur (122) verfahrbar ist, und/oder an der die Basis (131) des wenigstens einen Roboters (140) über die Arbeitsstation (210, 220, 230, 240, 250, 260) verfahrbar angeordnet ist.
6. Produktionsanlage nach einem der Ausführungsbeispiele 1 bis 5, **dadurch gekennzeichnet, dass** der Roboter (140) ein Werkzeug (150) aufweist und so ausgeführt ist, dass das Werkzeug (150) im Raum der Arbeitsstation (210, 220, 230, 240, 250, 260) bewegbar und verschwenkbar ist.
7. Produktionsanlage nach Ausführungsbeispiel 6, **dadurch gekennzeichnet, dass** das Werkzeug (150) wechselbar in Bezug auf den Roboter (140) ausgeführt ist.
8. Produktionsanlage nach Ausführungsbeispiel 7, **dadurch gekennzeichnet, dass** das wechselbare Werkzeug (150) in einem mit dem Roboter (140) verfahrbaren oder an der Arbeitsstation (210, 220, 230, 240, 250, 260) oder im Bereich der Schalung (10) befindlichen Aufbewahrungsraum enthalten ist.
9. Produktionsanlage nach einem der Ausführungsbeispiele 6 bis 8, **dadurch gekennzeichnet, dass** es sich bei dem Werkzeug (150) um einen Drehmomentschrauber, eine Bürste, eine Walze, ein Vermessungselement, eine Düse, einen Scanner, einen Greifer, oder eine Kamera handelt.
10. Produktionsanlage nach einem der Ausführungsbeispiele 1 bis 9, **dadurch gekennzeichnet, dass** die wenigstens eine Arbeitsstation (210, 220, 230, 240, 250, 260) eine Station zum Öffnen oder Schließen der Schalung (10) oder eines Deckels der Schalung (10), eine Station zum Entnehmen des Betontübbings (500), eine Station zum Reinigen der Schalung (10), eine Station zum Vorbereiten der Schalung (10) zum nachfolgenden Einbringen von Beton, eine Station zum Bestücken der Schalung (10) mit wenigstens einem Element (510) des Betontübbings(500), eine Station zum Vermessen der Schalung (10), eine Station zum Befüllen der Schalung (10) mit Beton und/oder eine Station zum Behandeln der Oberfläche des eingebrachten Betons des Betontübbings (500) ist.
11. Produktionsanlage nach Ausführungsbeispiele 10, **dadurch gekennzeichnet, dass** es sich bei dem wenigstens einen Element (510) um eine Dichtung, einen Schutzliner, ein Bewehrungselement, einen Sensor, insbesondere einen Temperatursensor, ein Entwässerungselement, ein Kunststoffelement und/oder ein Erektordübel handelt.
12. Produktionsanlage nach einem der Ausführungsbeispiele 1 bis 11, **dadurch gekennzeichnet, dass** wenigstens zwei parallel angeordnete Produktionslinien mit wenigstens zwei parallelen Arbeitsstationen vorgesehen sind.
13. Produktionsanlage nach Ausführungsbeispiel 12, **dadurch gekennzeichnet, dass** der Roboter zwischen wenigstens zwei parallelen Arbeitsstationen der wenigstens zwei parallelen Produktionslinien verfahrbar ist.
14. Produktionsanlage nach einem der Ausführungsbeispiele 1 bis 13, **dadurch gekennzeichnet, dass** wenigstens eine Produktionsanlage zur Fertigung von Bewehrungen für die Tübbinge (500) vorgeschaltet ist, die bevorzugt in einem Lager zwischengelagert werden.
15. Produktionsanlage nach einem der Ausführungsbeispiele 1 bis 14, **dadurch gekennzeichnet, dass** wenigstens eine Arbeitsstation (210, 220, 230, 240, 250, 260) modular aufgebaut ist.
16. Produktionsanlage nach einem der Ausführungsbeispiele 1 bis 15, **dadurch gekennzeichnet, dass** die Härtestation (300) aus einzelnen Härtekammern (330) aufgebaut ist, die bevorzugt als ein Standart-Iso-Container ausgeführt sind.
17. Produktionsanlage nach einem der Ausführungsbeispiele 1 bis 16, **dadurch gekennzeichnet, dass** die Härtestation (300) mehrere übereinander angeordnete Ebenen aufweist.
18. Verfahren zur Herstellung eines Betontübbings (500) eines Tunnelausbausystems mit wenigstens einer Schalung (10) insbesondere mit einer Produktionsanlage (100) nach einem der Ausführungsbeispiele 1 bis 17, mit den Schritten:
   1. Anordnen einer Schalung (10) an einem Standort oder in einer jeweiligen Arbeitsstation (210, 220, 230, 240, 250, 260) entlang wenigstens einer Produktionslinie (200) der Produktionsanlage (100), bevorzugt positionsgenau,
   2. falls erforderlich, Erkennen des Schalungstyps in der Arbeitsstation (210, 220, 230, 240, 250, 260) oder an dem Standort,
   3. falls erforderlich, Aufnehmen des zur Durchführung eines Arbeitsschrittes notwendigen Werkzeugs (150) durch einen Roboter (140),
   4. Verfahren einer Basis (131) des Roboters (140) entlang eines Fahrwegs (120) und/oder einer Traverse (131) zum X, Y-Ausrichten an eine notwendige Position zur Durchführung des Arbeitsschrittes an der Arbeitsstation (210, 220, 230, 240, 250, 260) oder an dem Standort,
   5. Ausführen und Abschließen des Arbeitsschritts durch den Roboter (140) mit dem dafür notwendigen Werkzeug (150),
   6. falls erforderlich Überprüfen des Abschlusses des Arbeitsschrittes, bevorzugt durch den Roboter (140), mit einem dafür ausgelegten Werkzeug (150),
   7. falls erforderlich, Wiederholen der Schritte 3 bis 6 zur Durchführung eines weiteren Arbeitsschrittes an der Arbeitsstation (210, 220, 230, 240, 250, 260) an dem Standort,
   8. Transport der Schalung (10) zur nächsten Arbeitsstation (210, 220, 230, 240, 250, 260) oder Härtestation (300),
   9. falls erforderlich Wiederholen der Schritte 3 bis 8 zur Durchführung eines Arbeitsschrittes an der nächsten Arbeitsstation (210, 220, 230, 240, 250, 260) oder an der nächsten Schalung am nächsten Standort.
19. Verfahren nach Ausführungsbeispiel 18, **dadurch gekennzeichnet, dass** es sich bei dem Werkzeug (150) um einen Drehmomentschrauber, eine Bürste, eine Walze, ein Vermessungselement, eine Düse, einen Scanner, einen Greifer, oder eine Kamera, handelt.
20. Verfahren nach Ausführungsbeispiel 18 oder 19, **dadurch gekennzeichnet, dass** die wenigstens eine Arbeitsstation (210, 220, 230, 240, 250, 260) eine Station zum Öffnen oder Schließen der Schalung (10) oder eines Deckels der Schalung (10), eine Station zum Entnehmen des Betontübbings (500), eine Station zum Reinigen der Schalung (10), eine Station zum Vorbereiten der Schalung (10) zum nachfolgenden Einbringen von Beton, eine Station zum Bestücken der Schalung (10) mit wenigstens einem Element (510) des Betontübbings(500), eine Station zum Vermessen der Schalung (10), eine Station zum Befüllen der Schalung (10) mit Beton und/oder eine Station zum Behandeln der Oberfläche des eingebrachten Betons des Betontübbings (500) ist.
21. Verfahren nach einem der Ausführungsbeispiele 18 bis 20, **dadurch gekennzeichnet, dass** das wechselbare Werkzeug (150) aus einem mit dem Roboter (140) verfahrbaren oder an der Arbeitsstation (210, 220, 230, 240, 250, 260) befindlichen Aufbewahrungsraum entnommen oder abgelegt wird.
22. Verfahren nach einem der Ausführungsbeispiele 18 bis 21, **dadurch gekennzeichnet, dass** eine Arbeitsschritt ein Öffnen oder Schließen der Schalung (10) oder des Deckels der Schalung (10), Entnehmen des Betontübbings (500), ein Reinigen der Schalung (10), ein Vorbereiten der Schalung (10) zum nachfolgenden Einbringen von Beton, ein Bestücken der Schalung (10) mit wenigsten einem Element (510) des Betontübbings (500), ein Vermessen der Schalung (10), ein Befüllen der Schalung (10) mit Beton oder ein Behandeln der Oberfläche des eingebrachten Betons des Betontübbings (500) ist.
23. Verfahren nach Ausführungsbeispiel 22, **dadurch gekennzeichnet, dass** es sich bei dem wenigstens einen Element (510) um eine Dichtung, einen Schutzliner, ein Bewehrungselement, einen Sensor, insbesondere einen Temperatursensor, ein Entwässerungselement, ein Kunststoffelement und/oder ein Erektordübel handelt.
24. Verfahren nach einem der Ausführungsbeispiele 18 bis 23, **dadurch gekennzeichnet, dass** es sich bei dem Werkzeug (150) um einen Drehmomentschrauber, eine Bürste, eine Walze, ein Vermessungselement, eine Düse, einen Scanner, einen Greifer, oder eine Kamera, handelt.
25. Steuerung des Verfahrens nach einem der Ausführungsbeispiele 18 bis 24 insbesondere in Verbindung mit einer Produktionsanlage (100) nach einem der Ausführungsbeispiele 1 bis 10, bei dem Arbeitsschritte an Arbeitsstationen (210, 220, 230, 240, 250, 260) oder an einem Standort abgearbeitet werden, indem Daten und/oder Sensordaten ausgewertet werden, basierend auf den Daten und/oder Sensordaten ein Roboter (140) an eine X,Y-Position entlang einer Produktionslinie positioniert wird, basierend auf den Daten und/oder Sensordaten ein Werkzeug (150) zur Ausführung des Arbeitsschritts ausgewählt wird und der Arbeitsschritt durch Übergabe von Steuerungsdaten an den Roboter (140) und/oder das Werkzeug (150) ausgeführt werden.

## Patentansprüche

1. Produktionsanlage zur Herstellung eines Betontübbings (500) eines Tunnelausbausystems mit wenigstens einer Schalung (10) zur Herstellung des Betontübbings (500), wobei die Produktionsanlage entweder als Umlaufanlage, die wenigstens eine Produktionslinie (200) mit wenigstens zwei Arbeitsstationen (210, 220, 230, 240, 250, 260) und mit wenigstens einem Transportweg (110) zwischen den wenigstens zwei Arbeitsstationen (210, 220, 230, 240, 250, 260) zum Ausführen jeweils wenigstens eines Arbeitsschrittes zur Herstellung des Betontübbings (500) aufweist, oder als Standanlage mit wenigstens zwei stationär angeordneten Schalungen (10), wobei an den Schalungen (10) die notwendigen Arbeitsschritte zur Herstellung des Betontübbings (500) jeweils ausgeführt werden, vorgesehen ist, und mit wenigstens einer Härtestation (300), zum Härten eines in die Schalung (10) zum Herstellen des Betontübbings (500) eingefüllten Betons, **dadurch gekennzeichnet, dass** wenigstens ein Roboter (140) zum Ausführen des wenigstens einen Arbeitsschritt an einer der wenigstens zwei Arbeitsstationen (210, 220, 230, 240, 250, 260) oder wenigstens zwei Schalungen (10) vorgesehen ist, dass wenigstens ein Fahrweg (120) vorgesehen ist, der sich wenigstens teilweise entlang oder quer zu der wenigstens einen Produktionslinie (200) oder entlang oder quer zu der Schalung (10) erstreckt, dass wenigstens ein Fahrelement (130) vorgesehen ist, an dem der wenigstens eine Roboter (140) mit einer Basis (131) angeordnet ist, und mit dem der wenigstens eine Roboter (140) entlang oder quer zu der wenigstens einen Produktionslinie (200) oder Schalung (10) wenigstens teilweise verfahrbar ist.

2. Produktionsanlage nach Anspruch 1, **dadurch gekennzeichnet, dass** die Basis (131) des wenigstens einen Roboters (140) an dem wenigstens einen Fahrelement (130) entlang des Fahrelements (130) in die Arbeitsstation (210, 220, 230, 240, 250, 260) hinein bewegbar ist.

3. Produktionsanlage nach Anspruch 1 oder 2, **dadurch gekennzeichnet, dass** der Fahrweg (120, 162) oberhalb der Arbeitsstation (210, 220, 230, 240, 250, 260) oder der Schalung (10), bevorzugt auf Pfeilern (121), angeordnet ist, oder neben der Arbeitsstation (210, 220, 230, 240, 250, 260) oder der Schalung (10) angeordnet ist.

4. Produktionsanlage nach einem der Ansprüche 1 bis 3, **dadurch gekennzeichnet, dass** der Fahrweg (120, 162) jeweils wenigstens eine Fahrspur (122) einseitig oder beidseitig entlang oder quer zu der wenigstens einen Produktionslinie (200) oder Schalung (10) aufweist, und dass es sich bei dem Fahrelement (130) bevorzugt um wenigstens eine Traverse handelt, die mit ihren Enden jeweils auf einer Fahrspur (122) verfahrbar ist, und/oder an der die Basis (131) des wenigstens einen Roboters (140) über die Arbeitsstation (210, 220, 230, 240, 250, 260) verfahrbar angeordnet ist.

5. Produktionsanlage nach einem der Ansprüche 1 bis 4, **dadurch gekennzeichnet, dass** der Roboter (140) ein Werkzeug (150) aufweist und so ausgeführt ist, dass das Werkzeug (150) im Raum der Arbeitsstation (210, 220, 230, 240, 250, 260) bewegbar und verschwenkbar ist, und dass das Werkzeug (150) bevorzugt wechselbar in Bezug auf den Roboter (140) ausgeführt ist, das wechselbare Werkzeug (150) bevorzugt in einem mit dem Roboter (140) verfahrbaren oder an der Arbeitsstation (210, 220, 230, 240, 250, 260) oder im Bereich der Schalung (10) befindlichen Aufbewahrungsraum enthalten ist und/oder, dass es sich bevorzugt bei dem Werkzeug (150) um einen Drehmomentschrauber, eine Bürste, eine Walze, ein Vermessungselement, eine Düse, einen Scanner, einen Greifer, oder eine Kamera handelt.

6. Produktionsanlage nach einem der Ansprüche 1 bis 9, **dadurch gekennzeichnet, dass** die wenigstens eine Arbeitsstation (210, 220, 230, 240, 250, 260) eine Station zum Öffnen oder Schließen der Schalung (10) oder eines Deckels der Schalung (10), eine Station zum Entnehmen des Betontübbings (500), eine Station zum Reinigen der Schalung (10), eine Station zum Vorbereiten der Schalung (10) zum nachfolgenden Einbringen von Beton, eine Station zum Bestücken der Schalung (10) mit wenigstens einem Element (510) des Betontübbings(500), eine Station zum Vermessen der Schalung (10), eine Station zum Befüllen der Schalung (10) mit Beton und/oder eine Station zum Behandeln der Oberfläche des eingebrachten Betons des Betontübbings (500) ist, und dass es sich bei dem wenigstens einen Element (510) bevorzugt um eine Dichtung, einen Schutzliner, ein Bewehrungselement, einen Sensor, insbesondere einen Temperatursensor, ein Entwässerungselement, ein Kunststoffelement und/oder ein Erektordübel handelt.

7. Produktionsanlage nach einem der Ansprüche 1 bis 6, **dadurch gekennzeichnet, dass** wenigstens zwei parallel angeordnete Produktionslinien mit wenigstens zwei parallelen Arbeitsstationen vorgesehen sind, und dass bevorzugt der Roboter zwischen wenigstens zwei parallelen Arbeitsstationen der wenigstens zwei parallelen Produktionslinien verfahrbar ist.

8. Produktionsanlage nach einem der Ansprüche 1 bis 7, **dadurch gekennzeichnet, dass** wenigstens eine Produktionsanlage zur Fertigung von Bewehrungen für die Tübbinge (500) vorgeschaltet ist, die bevorzugt in einem Lager zwischengelagert werden, und/oder, dass wenigstens eine Arbeitsstation (210, 220, 230, 240, 250, 260) modular aufgebaut ist.

9. Produktionsanlage nach einem der Ansprüche 1 bis 8, **dadurch gekennzeichnet, dass** die Härtestation (300) aus einzelnen Härtekammern (330) aufgebaut ist, die bevorzugt als ein Standart-Iso-Container ausgeführt sind, und/oder, dass die Härtestation (300) mehrere übereinander angeordnete Ebenen aufweist.

10. Verfahren zur Herstellung eines Betontübbings (500) eines Tunnelausbausystems mit wenigstens einer Schalung (10) insbesondere mit einer Produktionsanlage (100) nach einem der Ansprüchen 1 bis 9, mit den Schritten:
1. Anordnen einer Schalung (10) an einem Standort oder in einer jeweiligen Arbeitsstation (210, 220, 230, 240, 250, 260) entlang wenigstens einer Produktionslinie (200) der Produktionsanlage (100), bevorzugt positionsgenau,
2. falls erforderlich, Erkennen des Schalungstyps in der Arbeitsstation (210, 220, 230, 240, 250, 260) oder an dem Standort,
3. falls erforderlich, Aufnehmen des zur Durchführung eines Arbeitsschrittes notwendigen Werkzeugs (150) durch einen Roboter (140),
4. Verfahren einer Basis (131) des Roboters (140) entlang eines Fahrwegs (120) und/oder einer Traverse (131) zum X, Y-Ausrichten an eine notwendige Position zur Durchführung des Arbeitsschrittes an der Arbeitsstation (210, 220, 230, 240, 250, 260) oder an dem Standort,
5. Ausführen und Abschließen des Arbeitsschritts durch den Roboter (140) mit dem dafür notwendigen Werkzeug (150),
6. falls erforderlich Überprüfen des Abschlusses des Arbeitsschrittes, bevorzugt durch den Roboter (140), mit einem dafür ausgelegten Werkzeug (150),
7. falls erforderlich, Wiederholen der Schritte 3 bis 6 zur Durchführung eines weiteren Arbeitsschrittes an der Arbeitsstation (210, 220, 230, 240, 250, 260) an dem Standort,
8. Transport der Schalung (10) zur nächsten Arbeitsstation (210, 220, 230, 240, 250, 260) oder Härtestation (300),
9. falls erforderlich Wiederholen der Schritte 3 bis 8 zur Durchführung eines Arbeitsschrittes an der nächsten Arbeitsstation (210, 220, 230, 240, 250, 260) oder an der nächsten Schalung am nächsten Standort.

11. Verfahren nach Anspruch 10, **dadurch gekennzeichnet, dass** es sich bei dem Werkzeug (150) um einen Drehmomentschrauber, eine Bürste, eine Walze, ein Vermessungselement, eine Düse, einen Scanner, einen Greifer, oder eine Kamera, handelt.

12. Verfahren nach Anspruch 10 oder 11, **dadurch gekennzeichnet, dass** die wenigstens eine Arbeitsstation (210, 220, 230, 240, 250, 260) eine Station zum Öffnen oder Schließen der Schalung (10) oder eines Deckels der Schalung (10), eine Station zum Entnehmen des Betontübbings (500), eine Station zum Reinigen der Schalung (10), eine Station zum Vorbereiten der Schalung (10) zum nachfolgenden Einbringen von Beton, eine Station zum Bestücken der Schalung (10) mit wenigstens einem Element (510) des Betontübbings(500), eine Station zum Vermessen der Schalung (10), eine Station zum Befüllen der Schalung (10) mit Beton und/oder eine Station zum Behandeln der Oberfläche des eingebrachten Betons des Betontübbings (500) ist.

13. Verfahren nach einem der Ansprüche 10 bis 12, **dadurch gekennzeichnet, dass** das wechselbare Werkzeug (150) aus einem mit dem Roboter (140) verfahrbaren oder an der Arbeitsstation (210, 220, 230, 240, 250, 260) befindlichen Aufbewahrungsraum entnommen oder abgelegt wird.

14. Verfahren nach einem der Ansprüche 10 bis 13, **dadurch gekennzeichnet, dass** eine Arbeitsschritt ein Öffnen oder Schließen der Schalung (10) oder des Deckels der Schalung (10), Entnehmen des Betontübbings (500), ein Reinigen der Schalung (10), ein Vorbereiten der Schalung (10) zum nachfolgenden Einbringen von Beton, ein Bestücken der Schalung (10) mit wenigsten einem Element (510) des Betontübbings (500), ein Vermessen der Schalung (10), ein Befüllen der Schalung (10) mit Beton oder ein Behandeln der Oberfläche des eingebrachten Betons des Betontübbings (500) ist, und dass es sich bevorzugt bei dem wenigstens einen Element (510) um eine Dichtung, einen Schutzliner, ein Bewehrungselement, einen Sensor, insbesondere einen Temperatursensor, ein Entwässerungselement, ein Kunststoffelement und/oder ein Erektordübel handelt.

15. Verfahren nach einem der Ansprüche 10 bis 14 , **dadurch gekennzeichnet, dass** eine Produktionsanlage (100) nach einem der Ansprüche 1 bis 9 mit einer Steuerung gesteuert wird, indem Daten und/oder Sensordaten ausgewertet werden, basierend auf den Daten und/oder Sensordaten ein Roboter (140) an eine X,Y-Position entlang einer Produktionslinie positioniert wird, basierend auf den Daten und/oder Sensordaten ein Werkzeug (150) zur Ausführung des Arbeitsschritts ausgewählt wird und der Arbeitsschritt durch Übergabe von Steuerungsdaten an den Roboter (140) und/oder das Werkzeug (150) ausgeführt werden. *****
